# EUROPEAN PATENT APPLICATION

(11) **EP 4 801 151 A1**
(43) Date of publication of application: **02.09.2026**
(21) Application number: 24896345.6
(22) Date of filing: 19.11.2024
(51) Int. Cl.: H04W 72/0446

(54) **DATA TRANSMISSION METHOD AND APPARATUS, AND STORAGE MEDIUM**

(30) Priority: 01.12.2023 CN 202311648256
(71) Applicant: Huawei Technologies Co., Ltd., Shenzhen, Guangdong 518129 (CN)
(72) Inventor: PENG, Zhongchong, Shenzhen, Guangdong 518129 (CN); LIU, Fengwei, Shenzhen, Guangdong 518129 (CN)
(74) Representative: Maiwald GmbH
(86) International application number: PCT/CN2024/132979
(87) International publication number: WO 2025/113254

(57) **Abstract**

Embodiments of this application relate to the field of communication technologies, and disclose a data transmission method, an apparatus, and a storage medium, to better ensure signal demodulation performance. The method includes: obtaining a transform processing parameter; performing transform processing on a first modulation symbol sequence {*a*₀*, a*₁*,* ..., *a*_{*N*-1}} based on the transform processing parameter to obtain a second modulation symbol sequence {*b*₀*, b*₁*, ..., b*_{*N*-1}}*,* and sequentially mapping the second modulation symbol sequence to N consecutive time domain symbols corresponding to a first subcarrier; and sending the second modulation symbol sequence to a terminal, where N is an integer greater than 1.

## Description

This application claims priority to Chinese Patent Application No. 202311648256.9, filed with the China National Intellectual Property Administration on December 1, 2023 and entitled "DATA TRANSMISSION METHOD, APPARATUS, AND STORAGE MEDIUM", which is incorporated herein by reference in its entirety.

### TECHNICAL FIELD

Embodiments of this application relate to the field of communication technologies, and in particular, to a data transmission method, an apparatus, and a storage medium.

### BACKGROUND

High-frequency communication frequency bands are generally above 6 gigahertz (gigahertz, GHz), mainly including 28 GHz, 39 GHz, 60 GHz, 73 GHz, and other frequency bands. Due to abundant frequency band resources in high-frequency communication frequency bands, high-frequency communication becomes a research hotspot. Although the high-frequency communication offers large bandwidth and high throughput, it also suffers from intermediate radio frequency distortion, easily causing phase errors. A most common cause of the phase errors is phase noise (phase noise, PHN), which severely affects performance of the high-frequency communication.

Currently, in high-frequency scenarios, phase tracking reference signals (phase tracking reference signal, PTRS) are mainly introduced to compensate for phase noise. However, as a baseline scheme, this method provides only limited compensation for the phase noise. For example, when a modulation order is low, the foregoing method can effectively compensate for the phase noise, to satisfy demodulation requirements of the high-frequency communication. However, in ultra-higher-order modulation scenarios (with a very high modulation order), signal demodulation requirements are much more stringent. In such cases, using the foregoing method is insufficient to satisfy the foregoing demodulation requirements, and performance of the high-frequency communication is still severely affected.

### SUMMARY

Embodiments of this application provide a data transmission method, an apparatus, and a storage medium, to better ensure signal demodulation performance.

According to a first aspect, a data transmission method is provided. The method may be performed by a network device, may be performed by a component in the network device, for example, a processor, a chip, or a chip system in the network device, or may be implemented by a logical module or software that can implement all or a part of functions of the network device. An example in which the method is performed by the network device is used below for description. The data transmission method includes: obtaining a transform processing parameter; performing transform processing on a first modulation symbol sequence {*a*₀, *a*₁, ... , a_{*N*-1}} based on the transform processing parameter to obtain a second modulation symbol sequence {*b*₀, *b*₁, ... , *b*_{*N*-1}}, and sequentially mapping the second modulation symbol sequence to N consecutive time domain symbols corresponding to a first subcarrier; and sending the second modulation symbol sequence to a terminal, where N is an integer greater than 1.

In this embodiment of this application, the network device may obtain the transform processing parameter, perform the transform processing on the first modulation symbol sequence based on the transform processing to obtain the second modulation symbol sequence, and sequentially map the second modulation symbol sequence to the N consecutive time domain symbols corresponding to the first subcarrier. In this way, the network device may map a modulation symbol in one time domain symbol to another time domain symbol in a distributed manner, thereby mitigating phase noise power fluctuations between time domain symbols in the second modulation symbol sequence. The network device sends the second modulation symbol sequence to the terminal. In this way, phase noise power fluctuations between time domain symbols in a third modulation symbol sequence that is received by the terminal and that corresponds to the second modulation symbol sequence are small, so that the terminal better demodulates the third modulation symbol sequence, thereby reducing impact of interference caused by phase noise on signal demodulation performance and better ensuring the signal demodulation performance.

With reference to the first aspect, in a possible implementation, before the obtaining the transform processing parameter, the method provided in this embodiment of this application further includes: determining, when an index value of a modulation and coding scheme corresponding to the first modulation symbol sequence is greater than or equal to an index threshold, that the transform processing needs to be performed on the first modulation symbol sequence.

In this implementation, an index value of a modulation and coding scheme may indirectly reflect a degree to which a signal is affected by phase noise, and as the index value of the modulation and coding scheme increases, impact of the phase noise on the signal also intensifies. Therefore, when the index value of the modulation and coding scheme corresponding to the first modulation symbol sequence is greater than or equal to the index threshold, the network device determines that the transform processing needs to be performed on the first modulation symbol sequence, so that the impact of the interference caused by the phase noise on the signal demodulation performance can be effectively reduced, thereby ensuring the signal demodulation performance.

With reference to the first aspect, in a possible implementation, the transform processing parameter includes at least one of the following: a type of the transform processing, a frequency domain granularity of the transform processing, a quantity of time-frequency resources on which the transform processing is performed, or whether the transform processing is performed on a time domain symbol that carries a phase tracking reference signal PTRS.

With reference to the first aspect, in a possible implementation, when a time domain density of the PTRS is 1, the transform processing parameter includes performing the transform processing on the time domain symbol that carries the PTRS; or when the time domain density of the PTRS is not 1, the transform processing parameter includes skipping performing the transform processing on the time domain symbol that carries the PTRS.

In this implementation, when the time domain density of the PTRS is 1, even if the network device performs the transform processing on the time domain symbol that carries the PTRS, no disruption is caused in the time domain symbol that carries the PTRS. Therefore, when the time domain density of the PTRS is 1, the transform processing parameter includes performing the transform processing on the time domain symbol that carries the PTRS, so that the network device can also perform the transform processing on the time domain symbol that carries the PTRS, to further mitigate the phase noise power fluctuations between the time domain symbols, thereby better ensuring the signal demodulation performance. When the time domain density of the PTRS is not 1, if the network device performs the transform processing on the time domain symbol that carries the PTRS, it is likely to cause disruption in the time domain symbol that carries the PTRS. Therefore, when the time domain density of the PTRS is not 1, the transform processing parameter includes skipping performing the transform processing on the time domain symbol that carries the PTRS. This can avoid the disruption in the time domain symbol that carries the PTRS.

With reference to the first aspect, in a possible implementation, a granularity of the transform processing includes a subcarrier granularity and/or a subband granularity, where the subband includes two or more subcarriers.

In other words, the network device may perform the transform processing at a subcarrier granularity, so that the network device may perform subsequent transform processing in a refined manner; and the network device may further perform the transform processing at a subband granularity, so that a quantity of times that the network device performs the transform processing can be reduced, thereby improving efficiency of the transform processing.

With reference to the first aspect, in a possible implementation, a quantity of subcarriers or subbands on which the transform processing is performed in a time-frequency resource block is an integer multiple of a quantity of OFDM symbols on which the transform processing is performed in the time-frequency resource block.

If the quantity of subcarriers or subbands on which the transform processing is performed in the time-frequency resource block is the integer multiple of the quantity of OFDM symbols on which the transform processing is performed in the time-frequency resource block, the network device may perform the transform processing on the entire time-frequency resource block, so that the phase noise power fluctuations between the time domain symbols can be mitigated as much as possible, thereby reducing, as much as possible, negative impact of the interference caused by the phase noise on the signal demodulation performance, and better ensuring the signal demodulation performance.

With reference to the first aspect, in a possible implementation, the method provided in this embodiment of this application further includes: skipping performing the transform processing on a first time-frequency resource when a quantity of subcarriers or subbands on which the transform processing is performed in the first time-frequency resource is less than or equal to a quantity threshold.

In other words, if the quantity of subcarriers or subbands on which the transform processing is performed in the first time-frequency resource is less than or equal to the quantity threshold, it may indicate that the first time-frequency resource includes a few frequency domain resources. However, for the first time-frequency resource including a few frequency domain resource, overall impact is small. Therefore, the network device may skip performing the transform processing on the first time-frequency resource, so that an effect of mitigating the phase noise power fluctuations between the time domain symbols is not greatly affected, and processing overheads of the network device can be reduced.

With reference to the first aspect, in a possible implementation, the method provided in this embodiment of this application further includes: sending first indication information, where the first indication information indicates that the terminal is to perform the transform processing on the third modulation symbol sequence based on the transform processing parameter to obtain a fourth modulation symbol sequence.

In other words, the network device sends the first indication information to the terminal, to indicate that the terminal also needs to perform the transform processing on the third modulation symbol sequence based on the transform processing parameter to obtain the fourth modulation symbol sequence, so as to ensure that the terminal can normally obtain through demodulation data sent by the network device.

With reference to the first aspect, in a possible implementation, the method provided in this embodiment of this application further includes: receiving second indication information, where the second indication information indicates information about a transform processing capability supported by the terminal.

In other words, the terminal sends the second indication information to the network device, to notify the network device of the information about the transform processing capability supported by the terminal, so that the network device can subsequently determine the transform processing parameter based on the information about the transform processing capability supported by the terminal.

With reference to the first aspect, in a possible implementation, the first modulation symbol sequence is a modulation symbol sequence obtained through layer mapping processing.

According to a second aspect, a data transmission method is provided. The method may be performed by a terminal, may be performed by a component in the terminal, for example, a processor, a chip, or a chip system of the terminal, or may be implemented by a logical module or software that can implement all or a part of functions of the terminal. An example in which the method is performed by the terminal is used below for description. The data transmission method includes: receiving a third modulation symbol sequence {*c*₀, *c*₁, ... , *c*_{*N*-1}} from a network device; obtaining a transform processing parameter; and performing transform processing on the third modulation symbol sequence based on the transform processing parameter to obtain a fourth modulation symbol sequence {*d*₁, *d*₂, ... , *d*_{*N*-1}}, and sequentially mapping the fourth modulation symbol sequence to N consecutive time domain symbols corresponding to a first subcarrier, where N is an integer greater than 1.

With reference to the second aspect, in a possible implementation, before the obtaining the transform processing parameter, the method provided in this embodiment of this application further includes: determining, when an index value of a modulation and coding scheme corresponding to the third modulation symbol sequence is greater than or equal to an index threshold, that the transform processing needs to be performed on the third modulation symbol sequence.

With reference to the second aspect, in a possible implementation, the transform processing parameter includes at least one of the following: a type of the transform processing, a frequency domain granularity of the transform processing, a quantity of time-frequency resources on which the transform processing is performed, or whether the transform processing is performed on a time domain symbol that carries a phase tracking reference signal PTRS.

With reference to the second aspect, in a possible implementation, when a time domain density of the PTRS is 1, the transform processing parameter includes performing the transform processing on the time domain symbol that carries the PTRS; or when the time domain density of the PTRS is not 1, the transform processing parameter includes skipping performing the transform processing on the time domain symbol that carries the PTRS.

With reference to the second aspect, in a possible implementation, a granularity of the transform processing includes a subcarrier granularity and/or a subband granularity, where the subband includes two or more subcarriers.

With reference to the second aspect, in a possible implementation, a quantity of subcarriers or subbands on which the transform processing is performed in a time-frequency resource block is an integer multiple of a quantity of OFDM symbols on which the transform processing is performed in the time-frequency resource block.

With reference to the second aspect, in a possible implementation, the method provided in this embodiment of this application further includes: skipping performing the transform processing on a first time-frequency resource when a quantity of subcarriers or subbands on which the transform processing is performed in the first time-frequency resource is less than or equal to a quantity threshold.

With reference to the second aspect, in a possible implementation, the method provided in this embodiment of this application further includes: receiving first indication information, where the first indication information indicates that the terminal is to perform the transform processing on the third modulation symbol sequence based on the transform processing parameter to obtain the fourth modulation symbol sequence.

With reference to the second aspect, in a possible implementation, the method provided in this embodiment of this application further includes: sending second indication information, where the second indication information indicates information about a transform processing capability supported by the terminal.

With reference to the second aspect, in a possible implementation, the third modulation symbol sequence is a modulation symbol sequence obtained through phase noise compensation.

After performing the phase noise compensation on the modulation symbol sequence, the terminal may perform the transform processing on the modulation symbol sequence (that is, the third modulation symbol sequence) obtained through the phase noise compensation, so that phase noise power fluctuations between time domain symbols can be further mitigated, thereby further reducing negative impact of interference caused by phase noise on signal demodulation performance, and better ensuring the signal demodulation performance.

According to a third aspect, a communication apparatus is provided, to implement the foregoing methods. The communication apparatus may be the network device in any one of the first aspect or the implementations of the first aspect, or an apparatus including the network device, or an apparatus included in the network device, for example, a chip. Alternatively, the communication apparatus may be the terminal in any one of the second aspect or the implementations of the second aspect, or an apparatus including the terminal, or an apparatus included in the terminal, for example, a chip. The communication apparatus includes a corresponding module, unit, or means (means) for implementing the foregoing methods. The module, the unit, or the means may be implemented by hardware or software, or implemented by hardware executing corresponding software. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in any one of the foregoing aspects and the possible implementations of the foregoing aspects. The transceiver module may include a transceiver circuit, a transceiver machine, a transceiver, or a communication interface. The processing module may be configured to implement a processing function in any one of the foregoing aspects and the possible implementations of the foregoing aspects.

In some possible designs, the transceiver module includes a sending module and a receiving module, respectively configured to implement the sending function and the receiving function in any one of the foregoing aspects and the possible implementation of the foregoing aspects.

According to a fourth aspect, a communication apparatus is provided, and includes a processor and a memory. The memory is configured to store computer instructions. When the processor executes the instructions, the communication apparatus is caused to perform the method according to any one of the foregoing aspects. The communication apparatus may be the network device in any one of the first aspect or the implementations of the first aspect, or an apparatus including the network device, or an apparatus included in the network device, for example, a chip. Alternatively, the communication apparatus may be the terminal in any one of the second aspect or the implementations of the second aspect, or an apparatus including the terminal, or an apparatus included in the terminal, for example, a chip.

According to a fifth aspect, a communication apparatus is provided, and includes a processor and a communication interface. The communication interface is configured to communicate with a module outside the communication apparatus. The processor is configured to execute a computer program or instructions, to cause the communication apparatus to perform the method according to any one of the foregoing aspects. The communication apparatus may be the network device in any one of the first aspect or the implementations of the first aspect, or an apparatus including the network device, or an apparatus included in the network device, for example, a chip. Alternatively, the communication apparatus may be the terminal in any one of the second aspect or the implementations of the second aspect, or an apparatus including the terminal, or an apparatus included in the terminal, for example, a chip.

According to a sixth aspect, a communication apparatus is provided, and includes at least one processor. The processor is configured to execute a computer program or instructions stored in a memory, to cause the communication apparatus to perform the method according to any one of the foregoing aspects. The memory may be coupled to the processor, or may be independent of the processor. The communication apparatus may be the network device in any one of the first aspect or the implementations of the first aspect, or an apparatus including the network device, or an apparatus included in the network device, for example, a chip. Alternatively, the communication apparatus may be the terminal in any one of the second aspect or the implementations of the second aspect, or an apparatus including the terminal, or an apparatus included in the terminal, for example, a chip.

In another implementation, the communication apparatus may include the processor, configured to implement the functions in any one of the foregoing aspects or the implementations of the foregoing aspects. In some possible designs, optionally, the communication apparatus further includes a memory, and the memory is configured to store necessary program instructions and data.

In addition, when the communication apparatus is a chip system, the communication apparatus may include a chip, or may include a chip and another discrete device. In this case, when the communication apparatus in any one of the third aspect to the sixth aspect is a chip, the foregoing sending action/function may be understood as an output, and the foregoing receiving action/function may be understood as an input.

According to a seventh aspect, a computer-readable storage medium is provided. The computer-readable storage medium stores a computer program or instructions. When the computer program or the instructions are run on a communication apparatus, the communication apparatus is caused to perform the method according to any one of the foregoing aspects or the implementations of the foregoing aspects.

According to an eighth aspect, a computer program product including instructions is provided. When the computer program product runs on a communication apparatus, the communication apparatus is caused to perform the method according to any one of the foregoing aspects or the implementations of the foregoing aspects.

According to a ninth aspect, a data transmission method is provided. The data transmission method includes the method according to any one of the first aspect or the implementations of the first aspect and the method according to any one of the second aspect or the implementations of the second aspect.

According to a tenth aspect, a communication system is provided. The communication system includes the network device in the foregoing aspects and the terminal in the foregoing aspects.

For technical effects brought by any one of the implementations of the third aspect to the tenth aspect, refer to the technical effects brought by a corresponding implementation of the first aspect. Details are not described herein again.

### BRIEF DESCRIPTION OF DRAWINGS

FIG. 1 is a diagram of a structure of a communication system according to an embodiment of this application;
FIG. 2 is a diagram of determining an error vector magnitude according to an embodiment of this application;
FIG. 3a, FIG. 3b, and FIG. 3c are diagrams of impact of different phase noise on a signal according to an embodiment of this application;
FIG. 4 is a diagram of change curves of a power spectral density of phase noise in different frequency bands according to an embodiment of this application;
FIG. 5a, FIG. 5b, and FIG. 5c are diagrams of impact of a common phase error and inter-subcarrier interference caused by same phase noise on a signal according to an embodiment of this application;
FIG. 6 is a diagram of inter-subcarrier interference curves of different time domain symbols according to an embodiment of this application;
FIG. 7a, FIG. 7b, and FIG. 7c are diagrams of PTRS introduction according to an embodiment of this application;
FIG. 8a, FIG. 8b, and FIG. 8c are another diagram of PTRS introduction according to an embodiment of this application;
FIG. 9 is a diagram of performance change of a signal according to an embodiment of this application;
FIG. 10 is a schematic flowchart of a data transmission method according to an embodiment of this application;
FIG. 11 is a diagram of quantities of time domain resources corresponding to different types of transform processing according to an embodiment of this application;
FIG. 12 is an example diagram of a subcarrier granularity and a subband granularity according to an embodiment of this application;
FIG. 13a, FIG. 13b, and FIG. 13c are diagrams of quantities of subcarriers included in subbands according to an embodiment of this application;
FIG. 14a, FIG. 14b, and FIG. 14c are diagrams of time domain resources on which transform processing is performed according to an embodiment of this application;
FIG. 15 is a diagram of reordering elements that are inverse transforms of each other according to an embodiment of this application;
FIG. 16 is a diagram of division of time-frequency resources on which transform processing is performed according to an embodiment of this application;
FIG. 17 is a diagram of a process of transform processing according to an embodiment of this application;
FIG. 18 is a diagram of a transmission waveform switching scenario according to an embodiment of this application;
FIG. 19 is a diagram of arrangement of PTRSs according to an embodiment of this application;
FIG. 20 is a diagram of an operation of generating, by a network device, a to-be-sent signal based on data according to an embodiment of this application;
FIG. 21 is a diagram of an operation of obtaining, by a terminal, data based on a received signal according to an embodiment of this application;
FIG. 22 is a diagram of a structure of a communication apparatus according to an embodiment of this application; and
FIG. 23 is a diagram of a structure of another communication apparatus according to an embodiment of this application.

### DESCRIPTION OF EMBODIMENTS

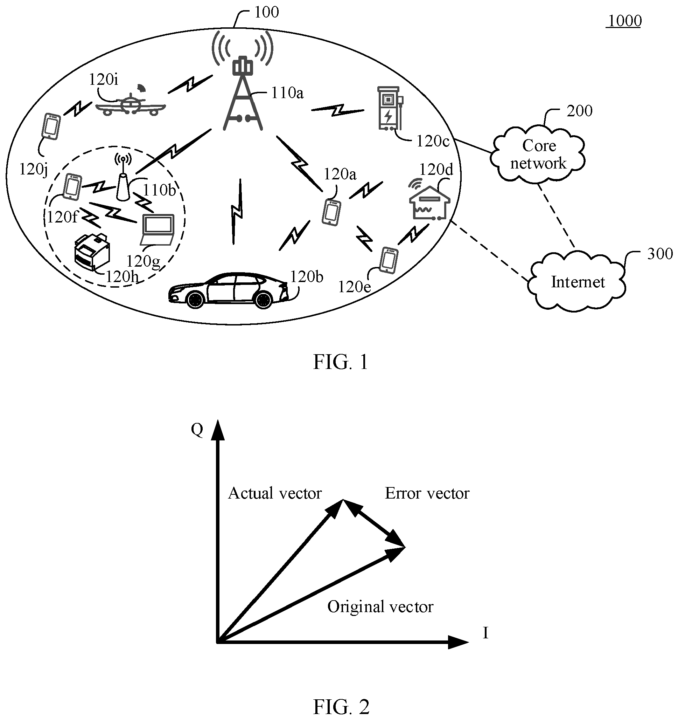

FIG. 1 is a diagram of an architecture of a communication system 1000 to which an embodiment of this application is applied. As shown in FIG. 1, the communication system includes a radio access network (radio access network, RAN) 100. The RAN 100 includes at least one RAN node (for example, 110a and 110b in FIG. 1, which are collectively referred to as 110), and may further include at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The terminals may be connected to each other in a wired or wireless manner, and the RAN nodes may be connected to each other in a wired or wireless manner. The communication system 1000 may further include a core network 200. The RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The communication system 1000 may further include an internet 300.

The RAN 100 may be an evolved universal terrestrial radio access (evolved universal terrestrial radio access, E-UTRA) system, a new radio (new radio, NR) system, or a future radio access system defined in the 3rd generation partnership project (3rd generation partnership project, 3GPP), or may be a Wi-Fi system. The RAN 100 may alternatively include the foregoing two or more different radio access systems. The RAN 100 may alternatively be an open RAN (open RAN, O-RAN).

The RAN node, also referred to as a radio access network device, a RAN entity, or an access node, is configured to help the terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, or an access node in a Wi-Fi system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help the terminal implement radio access, and different RAN nodes separately implement a part of functions of a base station. For example, the RAN node may be a central unit (central unit, CU), a distributed unit (distributed unit, DU), or a radio unit (radio unit, RU). The CU herein implements functions of a radio resource control protocol and a packet data convergence protocol (packet data convergence protocol, PDCP) of the base station, and may further implement functions of a service data adaptation protocol (service data adaptation protocol, SDAP). The DU implements functions of a radio link control layer and a medium access control (medium access control, MAC) layer of the base station, and may further implement a part or all of functions of a physical layer. For detailed descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further classified into two types of RAN nodes at a CU-control plane and a CU-user plane.

In different systems, the RAN node may have different names. For example, in an O-RAN system, the CU may be referred to as an open CU (open CU, O-CU), the DU may be referred to as an open DU (open DU, O-DU), and the RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following provides descriptions by using an example in which a base station or a network device is used as the RAN node.

A terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal may be a mobile phone, a tablet computer, a computer having a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a handheld device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for the terminal 120j that accesses the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b in FIG. 1 may be referred to as communication apparatuses having a function of the base station, and 120a to 120j in FIG. 1 may be referred to as communication apparatuses having a function of the terminal. The air interface protocol in this application may be an air interface protocol in 5G NR, 6G, or a future mobile communication system.

Communication between the base station and the terminal, between the base stations, or between the terminals may be performed by using a licensed spectrum, an unlicensed spectrum, or both the licensed spectrum and the unlicensed spectrum. Communication may be performed by using a spectrum below 6 gigahertz (gigahertz, GHz), a spectrum above 6 GHz, or both the spectrum below 6 GHz and the spectrum above 6 GHz. A spectrum resource used for wireless communication is not limited in embodiments of this application.

In embodiments of this application, the function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may alternatively be performed by a module (for example, a chip or a modem) in the terminal, or may be performed by an apparatus including the function of the terminal.

In embodiments of this application, a time domain symbol may be an orthogonal frequency division multiplexing (orthogonal frequency division multiplexing, OFDM) symbol, or may be a discrete Fourier transform-spread-OFDM (Discrete Fourier Transform-spread-OFDM, DFT-s-OFDM) symbol. Unless otherwise specified, symbols in embodiments of this application are time domain symbols.

It may be understood that, in embodiments of this application, a physical downlink shared channel (physical downlink shared channel, PDSCH), a physical downlink control channel (physical downlink control channel, PDCCH), and a physical uplink shared channel (physical uplink shared channel, PUSCH) are merely examples of a downlink data channel, a downlink control channel, and an uplink data channel respectively. In different systems and different scenarios, a data channel and a control channel may have different names. This is not limited in embodiments of this application.

For ease of understanding of technical solutions provided in embodiments of this application, technological terms related to this application are briefly described as follows.
1. OFDM is a multi-carrier transmission waveform based on frequency division multiplexing. Signals participating in multiplexing are orthogonal to each other. A high-speed data stream is converted into a plurality of parallel low-speed data streams through serial/parallel conversion, and then the plurality of parallel low-speed data streams are allocated to several subcarriers of different frequencies for transmission.
   It may be understood that, in a conventional frequency division multiplexing technology system, there is a guard interval between signals. In other words, in the conventional frequency division multiplexing technology system, spectra of subcarriers that carry signals do not overlap. However, in an OFDM system, signals are orthogonal to each other, so that spectra of subcarriers that carry the signals overlap. In this way, an OFDM technology can improve spectrum utilization.
2. DFT-s-OFDM is a derivative technology based on OFDM, and may also be referred to as a linear precoding OFDM technology. DFT-s-OFDM is mainly used to perform D-point discrete Fourier transform (discrete Fourier transform, DFT) processing on subcarriers used when a communication device sends a plurality of time domain signals. The DFT processing may also be referred to as transform precoding processing. D is a quantity of resource elements (resource elements, REs) included in a scheduled bandwidth, so that each of the plurality of time domain signals may be transformed from time domain to frequency domain, and OFDM modulation is performed on a plurality of frequency domain signals obtained through transformation. In this way, the plurality of frequency domain signals are transformed to time domain, and the communication device may send a plurality of time domain signals.
3. Phase noise, often abbreviated as PN, means a random change of a phase of a to-be-sent signal of a communication device caused by various types of noise.

However, interference caused by phase noise to an original to-be-sent signal may be classified into the following two types: a common phase error (common phase error, CPE) and inter-subcarrier interference (inter-subcarrier interference, ICI).

The CPE represents interference caused by phase noise to a single subcarrier of an original signal. The ICI represents interference caused by phase noise to subcarriers of an original signal.

It is assumed that phase noise of an OFDM time domain signal is θₙ, where n=0, 1, ..., N_{c}-1, and N_{c} represents a quantity of subcarriers allocated to a channel. A frequency domain response of phase noise corresponding to an i^{th} subcarrier satisfies the following Formula 1: ${E}_{k} = {\sum }_{n = 0}^{{N}_{c} - 1} \frac{{e}^{{jθ}_{n}}}{{N}_{c}} {e}^{- j \times 2 π {in / N}_{c}}$ where i=0, 1, 2, ..., N_{c}-1.

Impact of phase noise on a frequency domain signal corresponding to the i^{th} subcarrier $S = \left[\begin{matrix}{S}_{0} \\ {S}_{1} \\ … \\ {S}_{{N}_{c} - 2} \\ {S}_{{N}_{c} - 1}\end{matrix}\right] = \left[\begin{matrix}{E}_{0} & {E}_{{N}_{c} - 1} & … & {E}_{2} & {E}_{1} \\ {E}_{1} & {E}_{0} & … & {E}_{3} & {E}_{2} \\ … & … & … & … & … \\ {E}_{{N}_{c} - 2} & {E}_{{N}_{c} - 3} & … & {E}_{0} & {E}_{{N}_{c} - 1} \\ {E}_{{N}_{c} - 1} & {E}_{{N}_{c} - 2} & … & {E}_{1} & {E}_{0}\end{matrix}\right] \left[\begin{matrix}{F}_{0} \\ {F}_{1} \\ … \\ {F}_{{N}_{c} - 2} \\ {F}_{{N}_{c} - 1}\end{matrix}\right]$

F represents an interference value of an original signal, that is, an original quadrature amplitude modulation (quadrature amplitude modulation, QAM) symbol, E represents a frequency domain response of phase noise, and S represents an interference value of a signal affected by the phase noise.

Formula 2 may be simplified into the following Formula 3: ${S}_{i} = {E}_{0} {s}_{i} + {\sum }_{j \neq i} {E}_{j} {s}_{mod \left(i-j{, N}_{c}\right)}$

It may be understood that "EₑSᵢ" in Formula 3 may be a CPE. Eₑ is a preset value, and Eₑ is independent of a subcarrier number, so that to-be-sent signals carried on subcarriers are subject to same interference under impact of same phase noise, that is, CPEs of the signals carried on the subcarriers are equal.

" ${\sum }_{j \neq i} {E}_{j} {s}_{mod \left(i-j{, N}_{c}\right)}$" in Formula 3 may be ICI. Eⱼ is a variable value, that is, Eⱼ corresponding to different subcarriers may vary, so that to-be-sent signals carried on subcarriers are subject to different interference from other subcarriers under impact of the same phase noise, that is, ICI of the signals carried on the subcarriers varies.

4. A reference signal is a signal known to a sending device or a receiving device, or a signal for which a time-frequency resource carrying the signal can be inferred according to a predetermined rule. The reference signal is mainly used by a communication device to perform channel estimation, signal demodulation assistance, detection, and the like.

In some examples, the reference signal may be classified into the following plurality of reference signals based on functions: a demodulation reference signal (demodulation reference signal, DMRS), a channel state information reference signal (channel state information reference signal, CSI-RS), a PTRS, a sounding reference signal (sounding reference signal, SRS), and the like.

The DMRS may be used for channel estimation, and the PTRS may be used for estimating an interference value (for example, ICI) caused by phase noise.

5. An error vector magnitude (error vector magnitude, EVM) represents deviation between a demodulated signal constellation diagram and an original signal constellation diagram under impact of factors such as power amplifier nonlinearity or a channel estimation error. More severe power amplifier nonlinearity indicates a greater EVM, and the error vector magnitude can describe signal in-band distortion well. As shown in FIG. 2, the EVM may be a magnitude of an error vector between an actual vector of a demodulated constellation point and an original vector of the constellation point, that is, the EVM may satisfy the following Formula 4: $EVM = \sqrt{\frac{mean \left[{\left({I}_{r}-{I}_{o}\right)}^{2}+{\left({Q}_{r}-{Q}_{o}\right)}^{2}\right]}{mean \left({{I}_{o}}^{2}+{{Q}_{o}}^{2}\right)}} \times 100 %$

(Iᵣ,Qᵣ) represents the actual vector of the demodulated constellation point, and (Iₒ,Qₒ) represents the original vector of the constellation point.

For high-frequency communication, although the high-frequency communication has a high bandwidth and a high throughput, the high-frequency communication is also subject to intermediate radio frequency distortion. Most common causes of phase errors include phase noise, a center frequency offset, a Doppler frequency shift, and the like. This severely affects performance of the high-frequency communication, and even causes a communication device to fail to perform communication based on a high-frequency communication frequency band.

The following uses the phase noise as an example to describe degradation of the performance of the high-frequency communication caused by the phase noise.

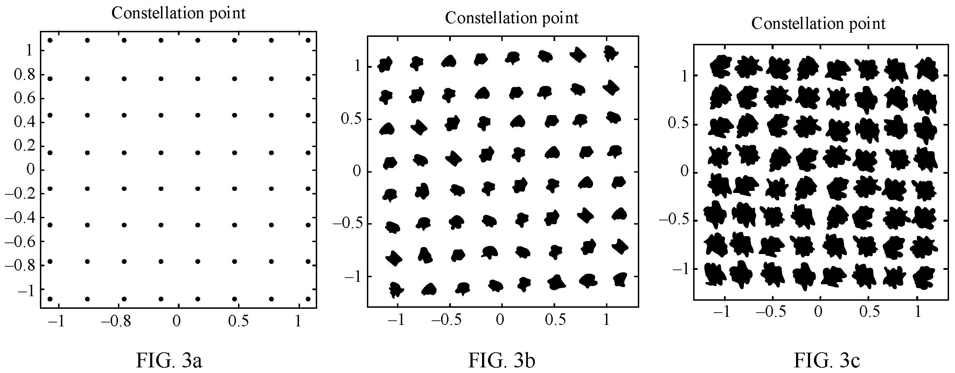

It can be learned from the foregoing related descriptions of the "phase noise" that the phase noise may destroy orthogonality between subcarriers of a to-be-sent signal, and affects a phase of a transmission channel, further degrading a signal to interference plus noise ratio (signal to interference plus noise ratio, SINR) and an EVM. In a case of different phase noise, a degree to which a signal is affected by the phase noise varies. FIG. 3a, FIG. 3b, and FIG. 3c are diagrams of impact of different phase noise on a signal. FIG. 3a is a diagram of constellation points of the signal when the signal is not affected by the phase noise (that is, the phase noise is 0); FIG. 3b is a diagram of constellation points of the signal when the signal is affected by weak phase noise; and FIG. 3c is a diagram of constellation points of the signal when the signal is affected by strong phase noise. It can be learned by comparing FIG. 3a, FIG. 3b, and FIG. 3c that, as the phase noise increases, an interval between the constellation points of the signal becomes smaller. In this case, it is difficult to effectively separate each constellation point of the signal, and consequently, signal demodulation performance is degraded. It can be learned from the foregoing that, larger phase noise indicates a higher degree to which the signal is affected by the phase noise.

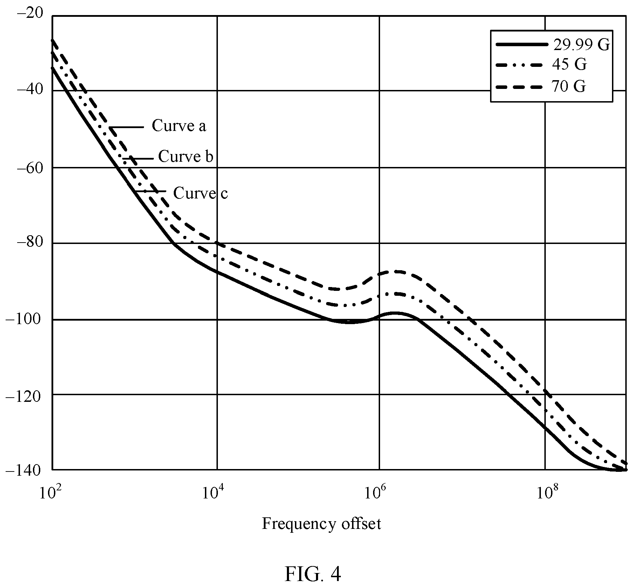

However, in a scenario in which the phase noise is present, as a frequency band increases, a power spectral density of the phase noise increases, that is, the phase noise becomes larger. For example, FIG. 4 shows change curves of the power spectral density of the phase noise in different frequency bands. As shown in FIG. 4, a curve a represents a change curve of the power spectral density of the phase noise in a frequency band of 29.55 G, a curve b represents a change curve of the power spectral density of the phase noise in a frequency band of 45 G, and a curve c represents a change curve of the power spectral density of the phase noise in a frequency band of 70 G. It can be learned by comparing the curve a, the curve b, and the curve c that, when a frequency offset is within a range of [10², 10⁸], the power spectral density of the phase noise corresponding to the curve a is higher than the power spectral density of the phase noise corresponding to the curve b, and the power spectral density of the phase noise corresponding to the curve b is higher than the power spectral density of the phase noise corresponding to the curve c.

In addition, in a scenario in which the phase noise is present, in addition to a frequency band factor, there are other factors that may affect signal demodulation performance. The other factors may include at least one of the following: a modulation order, an ICI fluctuation degree, or a quantity of code blocks.

The following describes how each of the foregoing plurality of factors affects the phase noise.

Modulation order: When a signal corresponds to different modulation orders, a degree to which signal demodulation performance is affected by the phase noise varies.

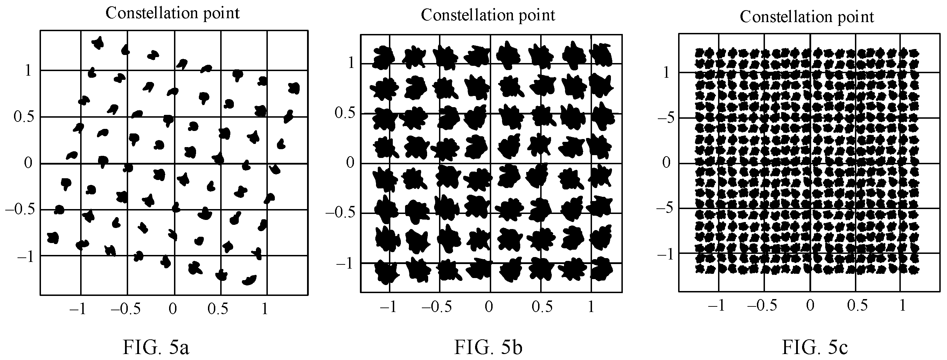

It can be learned from the foregoing related descriptions of the "phase noise" that interference caused by the phase noise to the original to-be-sent signal may include the CPE and the ICI. FIG. 5a, FIG. 5b, and FIG. 5c are diagrams of impact of a CPE and ICI caused by same phase noise on a signal. FIG. 5a is a diagram of impact of the CPE and the ICI caused by the phase noise on a 64QAM signal. A rotation angle of a constellation point may be considered as impact caused by the CPE, and diffusion of the constellation point may be considered as impact caused by the ICI. FIG. 5b is a diagram of impact of the ICI caused by the phase noise on the 64QAM signal after the CPE caused by the phase noise is compensated for. FIG. 5c is a diagram of impact of the ICI caused by the phase noise on a 256QAM signal after the CPE caused by the phase noise is compensated for. It can be learned by comparing FIG. 5b and FIG. 5c that, constellation points of the 256QAM signal are more difficult to be separated than constellation points of the 64QAM signal. This significantly increases difficulty in demodulating/decoding the 256QAM signal. Therefore, in a case of same phase noise and a same frequency band, a higher modulation order corresponding to a signal indicates greater impact of ICI on the signal, resulting in an increase in difficulty in demodulating/decoding the signal.

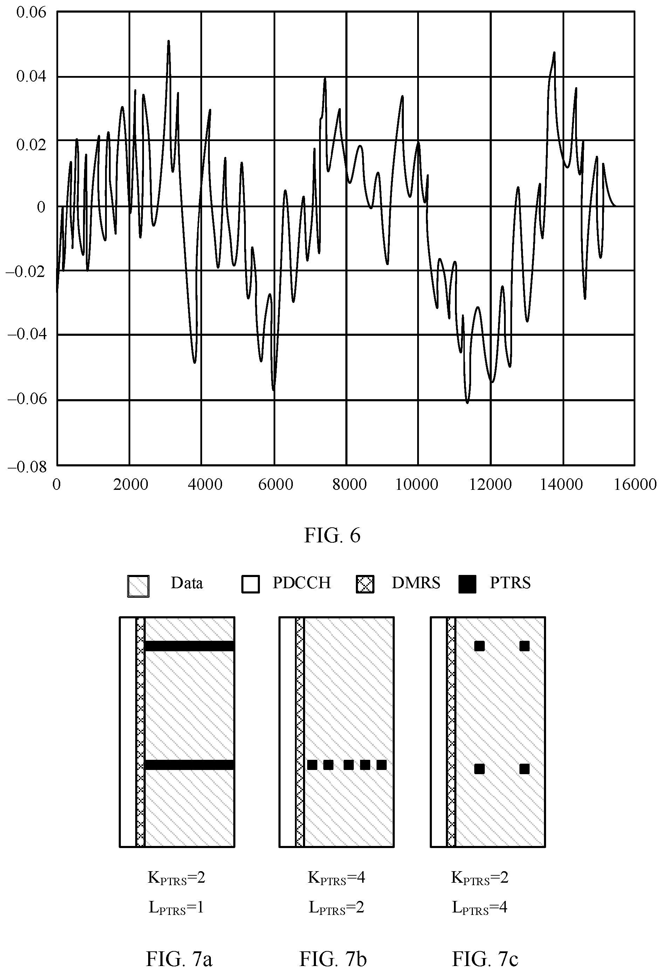

ICI fluctuation degree: Even in a scenario in which phase noise is fixed, different time domain symbols are affected differently by the phase noise. For example, FIG. 6 shows ICI curves of different time domain symbols. A horizontal axis represents an index value of a time domain symbol, and frequency domain represents ICI caused by impact of the phase noise on the time domain symbol. As shown in FIG. 6, ICI between different time domain symbols may differ greatly. However, the ICI causes severe impact on signal demodulation performance. Therefore, a large ICI fluctuation degree exacerbates instability of signal demodulation in a communication device, further degrading the signal demodulation performance.

Quantity of code blocks: When a frequency band is fixed, and phase noise is also fixed, if a signal corresponds to different quantities of code blocks, signal demodulation performance is affected differently by the phase noise. When a quantity of transport streams of a signal is large, an average quantity of code blocks carried by an OFDM symbol in the signal also increases. In this case, if the OFDM symbol is affected by phase noise, a decoding error and the like may occur on a large quantity of code blocks. In other words, as the average quantity of code blocks carried by the OFDM symbol increases, signal demodulation performance is also improved due to impact of the phase noise.

It can be learned from the foregoing related descriptions of the "reference signal" that, as a type of reference signal, a PTRS may be used for estimating an interference value (for example, ICI) caused by phase noise. In view of this, currently, the impact caused by the phase noise is mainly compensated for by using the PTRS. There are mainly the following two schemes in which the impact caused by the phase noise is compensated for by using the PTRS: Scheme 1: a baseline scheme for PTRS introduction, and Scheme 2: an iterative phase noise compensation scheme.

### Scheme 1: Baseline scheme for PTRS introduction

The baseline scheme for PTRS introduction may include: in a CP-OFDM system, introducing a PTRS based on two parameters: a time domain density L_{PTRS} and a frequency domain density K_{PTRS}; and estimating, based on the PTRS, ICI caused by phase noise. Phase noise compensation is performed on a signal based on the ICI obtained through estimation. The time domain density L_{PTRS} represents that one CP-OFDM symbol carries the PTRS in every L_{PTRS} CP-OFDM symbols, the frequency domain density K_{PTRS} represents that one RE carries the PTRS in every K_{PTRS}×N_{sc}/_{RB} REs, N_{sc}/_{RB} is a quantity of REs included in one RB, an RE may represent a subcarrier in frequency domain, and both L_{PTRS} and K_{PTRS} are positive integers.

For example, FIG. 7a, FIG. 7b, and FIG. 7c are diagrams of PTRS introduction. As shown in FIG. 7a, FIG. 7b, and FIG. 7c, a vertical axis represents frequency domain, and a horizontal axis represents time domain. There are a total of four RBs in frequency domain, and there are a total of 14 symbols in time domain. FIG. 7a is a diagram of PTRS introduction when a time domain density L_{PTRS} is 1, and a frequency domain density K_{PTRS} is 2; FIG. 7b is a diagram of PTRS introduction when a time domain density L_{PTRS} is 2, and a frequency domain density K_{PTRS} is 4; and FIG. 7c is a diagram of PTRS introduction when a time domain density L_{PTRS} is 4, and a frequency domain density K_{PTRS} is 2. In addition, FIG. 7a, FIG. 7b, and FIG. 7c further show a diagram of data, a PDCCH, and a DMRS.

The baseline scheme for PTRS introduction may further include: in a DFT-s-OFDM system, introducing the PTRS based on three parameters: a time domain density (time domain density, TD), a quantity Ng of PTRS groups, and a quantity Ns of sampling points in one PTRS group; and estimating, based on the PTRS, ICI caused by phase noise. Phase noise compensation is performed on a signal based on the ICI obtained through estimation.

The TD represents that one DFT-s-OFDM symbol carries the PTRS in every TD DFT-s-OFDM symbols. For example, the TD being 1 may represent that each DFT-s-OFDM symbol carries the PTRS. For another example, the TD being 2 may represent that every other DFT-s-OFDM symbol carries the PTRS. Generally, the TD is 1 by default. If the TD is specifically indicated by higher layer signaling, the TD may be a value indicated by the higher layer signaling.

The quantity Ng of PTRS groups represents a quantity of PTRS groups included in one DFT-s-OFDM symbol.

The quantity Ns of sampling points in one PTRS group represents a quantity of sampling points included in one PTRS group.

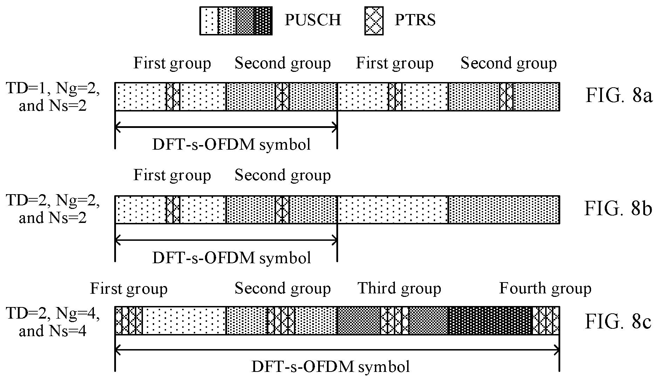

For example, FIG. 8a, FIG. 8b, and FIG. 8c are diagrams of PTRS introduction. As shown in FIG. 8a, FIG. 8b, and FIG. 8c, FIG. 8a is a diagram of PTRS introduction when a TD is 1, a quantity Ng of PTRS groups is 2, and a quantity Ns of sampling points in one PTRS group is 2; FIG. 8b is a diagram of PTRS introduction when a TD is 2, a quantity Ng of PTRS groups is 2, and a quantity Ns of sampling points in one PTRS group is 2; and FIG. 8c is a diagram of PTRS introduction when a TD is 1, a quantity Ng of PTRS groups is 4, and a quantity Ns of sampling points in one PTRS group is 4. In addition, FIG. 8a, FIG. 8b, and FIG. 8c further show a diagram of data introduced into a PUSCH channel. For understanding of the data introduced into the PUSCH channel, refer to FIG. 8a, FIG. 8b, and FIG. 8c. Details are not described herein again.

Problems of Scheme 1: When a modulation order is small, or a power spectral density of phase noise is low, phase noise compensation is performed based on ICI obtained through PTRS estimation, so that a demodulation requirement can be satisfied well. However, when the modulation order is large, or the power spectral density of the phase noise fluctuates greatly, during signal demodulation, a requirement on an EVM is very high. For example, the EVM needs to be lower than 2.5%. If rough phase noise compensation is performed on a signal based only on the ICI obtained through the PTRS estimation, residual phase noise power fluctuations are highly likely to be large. As a result, an expected effect of phase noise compensation fails to be achieved, and signal demodulation performance is still affected.

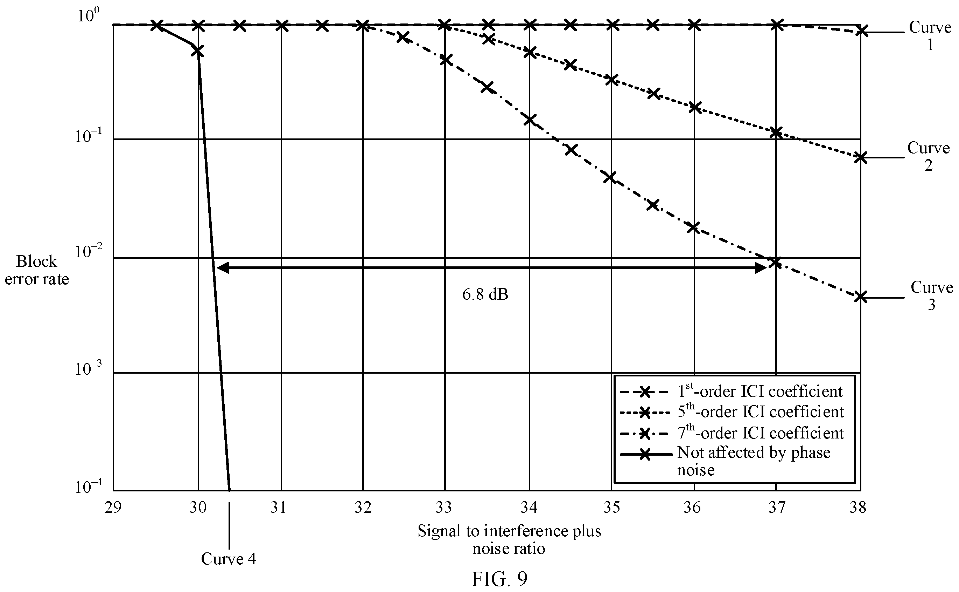

Further, it can be learned from the foregoing related descriptions of "Scheme 1" that, in a process of performing phase noise compensation based on Scheme 1, a communication device may control an ICI coefficient to control an effect of phase noise compensation. For example, FIG. 9 is a diagram of performance change of a signal after phase noise compensation is performed on the signal based on Scheme 1. As shown in FIG. 9, a curve 1 in FIG. 9 is a performance change curve of a signal when phase noise is compensated for based on a 1^{st}-order ICI coefficient; a curve 2 in FIG. 9 is a performance change curve of a signal when phase noise is compensated for based on a 5^{th}-order ICI coefficient; and a curve 3 in FIG. 9 is a performance change curve of a signal when phase noise is compensated for based on a 7^{th}-order ICI coefficient. It can be learned by comparing the curve 1, the curve 2, and the curve 3 that, as an order of an ICI coefficient increases, performance of the signal is better. For example, a block error rate decreases, or an SINR decreases.

A curve 4 is a performance change curve of a signal when the signal is not affected by phase noise. It can be learned by comparing the curve 3 and the curve 4 that, even if the ICI coefficient is a 7^{th}-order ICI coefficient, there is still a large difference between signal performance corresponding to the curve 3 and signal performance corresponding to the curve 4. For example, when a BLER is approximately 10⁻², a difference between an SINR corresponding to the curve 3 and an SINR corresponding to the curve 4 is 6.8 dB. In view of this, it can be learned that Scheme 1 provides a low compensation effect for phase noise, still resulting in poor signal demodulation performance.

In addition, in Scheme 1, a correlation between OFDM symbols is not considered. If the ICI caused by the phase noise is compensated for by using Scheme 1, the communication device needs to perform an independent phase noise compensation operation on each OFDM symbol. As a result, it is highly likely that there is still large residual phase noise between the OFDM symbols, and impact of the phase noise on the signal demodulation performance cannot be eliminated, still affecting the signal demodulation performance.

### Scheme 2: Iterative phase noise compensation scheme

The iterative phase noise compensation scheme may include: The communication device performs ICI coefficient estimation on a higher-order modulation signal, and performs phase noise compensation on the higher-order modulation signal based on ICI obtained through the estimation. The communication device may perform repeated iterative processing on the higher-order modulation signal based on the foregoing scheme. In this way, with each iteration, impact of residual phase noise on the higher-order modulation signal is reduced, thereby ensuring demodulation performance of the higher-order modulation signal, and making data obtained by demodulating the higher-order modulation signal more accurate.

Problems of Scheme 2: First, performing the phase noise compensation through the iterative processing requires the communication device to perform processing such as fast Fourier transform (fast Fourier transform, FFT), inverse fast Fourier transform (inverse fast Fourier transform, IFFT), demodulation, ICI estimation, and phase noise compensation in each iteration, greatly increasing processing overheads of the communication device; second, a processing delay of performing the phase noise compensation through the iterative processing also needs to be ensured to be within an appropriate range, imposing a high requirement on a processing capability of the communication device.

Based on this, this application provides a data transmission method. A network device may obtain a transform processing parameter, perform transform processing on a first modulation symbol sequence {*a*₀, *a*₁, ... , a_{*N*-1}} based on the transform processing to obtain a second modulation symbol sequence {*b*₀, *b*₁, ... , *b*_{*N-*1}}, and sequentially map the second modulation symbol sequence to N consecutive time domain symbols corresponding to a first subcarrier. In this way, the network device may disrupt ordering positions of time domain symbols corresponding to subcarriers, so that a modulation symbol in one time domain symbol may be mapped to another time domain symbol in a distributed manner, thereby mitigating phase noise power fluctuations between time domain symbols in the second modulation symbol sequence. The network device sends the second modulation symbol sequence to a terminal. In this way, phase noise power fluctuations between time domain symbols in a third modulation symbol sequence that is received by the terminal and that corresponds to the second modulation symbol sequence are small, so that the terminal better demodulates the third modulation symbol sequence, thereby reducing impact of interference caused by phase noise on signal demodulation performance and better ensuring the signal demodulation performance.

In addition, it can be learned from the foregoing related descriptions of "Scheme 2" that Scheme 2 is to perform phase noise compensation through iterative processing. However, if Scheme 2 is used for performing phase noise compensation, processing overheads of the network device are increased, and a heavy processing burden is caused to the network device. In comparison with the foregoing Scheme 2, in the data transmission method provided in embodiments of this application, the network device does not need to repeatedly perform a phase noise compensation operation, and only needs to perform the transform processing on the first modulation symbol sequence based on the transform processing parameter to obtain the second modulation symbol sequence. This can achieve compensation for the impact of the phase noise, thereby avoiding an increase in the processing overheads and the processing burden of the network device.

The following describes the technical solutions in embodiments of this application with reference to the accompanying drawings in embodiments of this application.

For ease of understanding of embodiments of this application, the following descriptions are provided before embodiments of this application are described.
1. In embodiments of this application, "indication" may include a direct indication and an indirect indication, or may include an explicit indication and an implicit indication. Information indicated by a piece of information (for example, the following first indication information) is referred to as to-be-indicated information. In a specific implementation process, the to-be-indicated information is indicated in a plurality of manners. For example, but not limited to, the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and another part of the to-be-indicated information is known or pre-agreed on. For example, specific information may alternatively be indicated based on an arrangement sequence of each piece of information that is pre-agreed on (for example, specified in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected according to a specific requirement. The selected indication manner is not limited in embodiments of this application. In this way, the indication manner in embodiments of this application should be understood as covering various methods that can enable a to-be-indicated party to learn of the to-be-indicated information.

It should be understood that the to-be-indicated information may be sent as a whole, or may be divided into a plurality of pieces of sub-information for separate sending. In addition, sending periodicities and/or sending occasions of these pieces of sub-information may be the same or different. A specific sending method is not limited in embodiments of this application. The sending periodicities and/or the sending occasions of these pieces of sub-information may be predefined, for example, predefined according to a protocol, or may be configured by a transmitting end device by sending configuration information to a receiving end device. The configuration information may include, for example, but is not limited to, radio resource control signaling, for example, one or a combination of at least two of radio resource control signaling, multiple access channel layer signaling, physical layer signaling, or downlink control information.

2. "Predefinition" or "preconfiguration" may be implemented by pre-storing corresponding code or a corresponding table in a device (for example, a terminal and/or a network device), or in another manner that may indicate related information. A specific implementation is not limited in embodiments of this application. "Storage" may mean being stored in one or more memories. The one or more memories may be separately disposed, or may be integrated into an encoder, a decoder, a processor, or a communication apparatus. Alternatively, a part of the one or more memories may be separately disposed, and a part may be integrated into a decoder, a processor, or a communication apparatus. A type of the memory may be a storage medium in any form. This is not limited in embodiments of this application.

It should be noted that in the following embodiments of this application, a name of a message between network elements, a name of each parameter, a name of each piece of information, or the like is merely an example, and there may be another name in another embodiment. This is not specifically limited in the method provided in embodiments of this application.

It may be understood that in embodiments of this application, each network element may perform a part or all of the steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be necessarily performed.

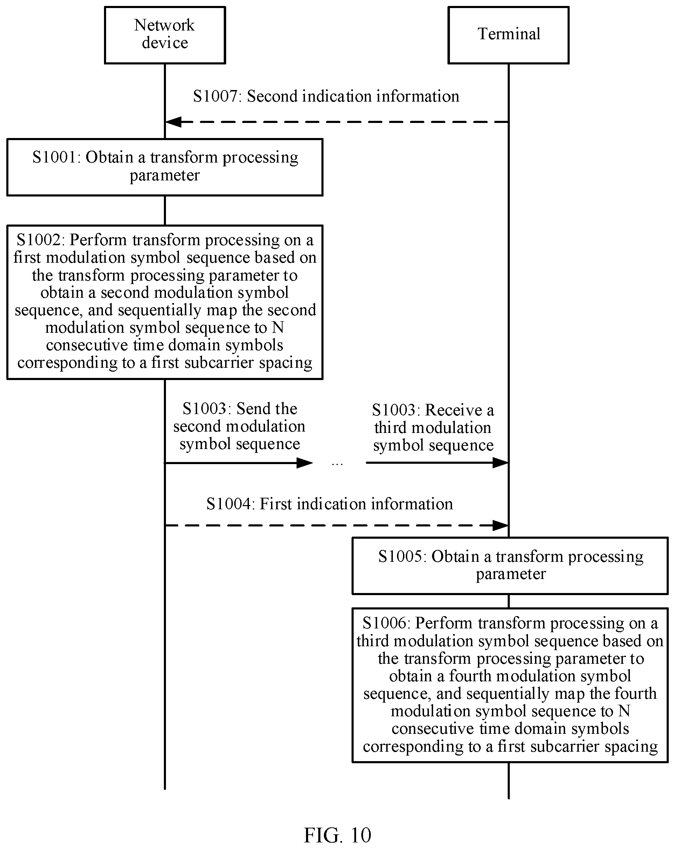

FIG. 10 shows an example of a data transmission method according to an embodiment of this application. The method is described by using interaction between a network device and a terminal as an example. Certainly, an action of the network device in the method may alternatively be performed by an apparatus/a module in the network device, for example, a chip, a processor, or a processing unit in the network device. An action of the terminal in the method may alternatively be performed by an apparatus/a module in the terminal, for example, a chip, a processor, or a processing unit in the terminal. This is not specifically limited in embodiments of this application. For example, as shown in FIG. 10, the data transmission method includes the following steps.

S1001: The network device obtains a transform processing parameter.

S1002: The network device performs transform processing on a first modulation symbol sequence {*a*₀, *a*₁, ... , a_{*N*-1}} based on the transform processing parameter to obtain a second modulation symbol sequence {*b*₀, *b*₁, ... , *b*_{*N*-1}}, and sequentially maps the second modulation symbol sequence to N consecutive time domain symbols corresponding to a first subcarrier, where N is an integer greater than 1.

S1003: The network device sends the second modulation symbol sequence to the terminal. Correspondingly, the terminal receives a third modulation symbol sequence {*c*₀, *c*₁, ... , *c*_{*N*-1}} from the network device.

After the second modulation symbol sequence sent by the network device to the terminal is transmitted through a radio channel, the modulation symbol sequence is affected by channel fading and interference, and therefore the modulation symbol sequence undergoes attenuation and distortion. In this application, the modulation symbol sequence obtained after the second modulation symbol sequence is transmitted through the radio channel and arrives at a terminal side is referred to as the third modulation symbol sequence. It may be understood that the third modulation symbol sequence and the second modulation symbol sequence correspond to same time-frequency resources.

In a possible implementation, the third modulation symbol sequence is a modulation symbol sequence obtained through phase noise compensation. In other words, the terminal may perform the transform processing after performing the phase noise compensation on the modulation symbol sequence based on Scheme 1, so that phase noise power fluctuations between time domain symbols can be further mitigated, thereby further reducing impact of interference caused by phase noise on signal demodulation performance and better ensuring the signal demodulation performance.

This application provides a data transmission method. A network device may obtain a transform processing parameter, perform transform processing on a first modulation symbol sequence based on the transform processing to obtain a second modulation symbol sequence, and sequentially map the second modulation symbol sequence to N consecutive time domain symbols corresponding to a first subcarrier. In this way, the network device may disrupt ordering positions of the N consecutive time domain symbols corresponding to the first subcarrier, so that a modulation symbol in one time domain symbol may be mapped to another time domain symbol in a distributed manner, thereby mitigating phase noise power fluctuations between time domain symbols in the second modulation symbol sequence. The network device sends the second modulation symbol sequence to a terminal. In this way, phase noise power fluctuations between time domain symbols in a third modulation symbol sequence that is received by the terminal and that corresponds to the second modulation symbol sequence are small, so that the terminal better demodulates the third modulation symbol sequence, thereby reducing impact of interference caused by phase noise on signal demodulation performance and better ensuring the signal demodulation performance.

In addition, it can be learned from the foregoing related descriptions of "Scheme 2" that Scheme 2 is to perform phase noise compensation through iterative processing. However, if Scheme 2 is used for performing phase noise compensation, processing overheads of the network device are increased, and a heavy processing burden is caused to the network device. In comparison with the foregoing Scheme 2, in the data transmission method provided in embodiments of this application, the network device does not need to repeatedly perform a phase noise compensation operation, and only needs to perform the transform processing on the first modulation symbol sequence based on the transform processing parameter to obtain the second modulation symbol sequence. This can achieve compensation for the impact of the phase noise, and avoid increase in the processing overheads and the processing burden of the network device.

The following describes the foregoing transform processing parameter.

In a possible implementation, the transform processing parameter may include at least one of the following: a type of the transform processing, a frequency domain granularity of the transform processing, a quantity of time-frequency resources on which the transform processing is performed, or whether the transform processing is performed on a time domain symbol that carries a PTRS.

The type of the transform processing may include at least one of the following: a DFT transform type, an orthogonal cover code (orthogonal cover code, OCC) transform type, or a reordering transform type. In a CP-OFDM system, the type of the transform processing may include at least one of the following: the DFT transform type, the OCC transform type, or the reordering transform type. However, in a DFT-s-OFDM system, the network device needs to perform DFT processing on a signal, so that the signal has a low peak-to-average power ratio. In the foregoing three types of transform processing, only reordering transform processing can ensure that the peak-to-average power ratio of the signal is within a low range. In view of this, in the DFT-s-OFDM system, the type of the transform processing may be the reordering transform type. Certainly, the foregoing description is merely an example of the type of the transform processing, and the type of the transform processing may further include another type. This is not limited in embodiments of this application.

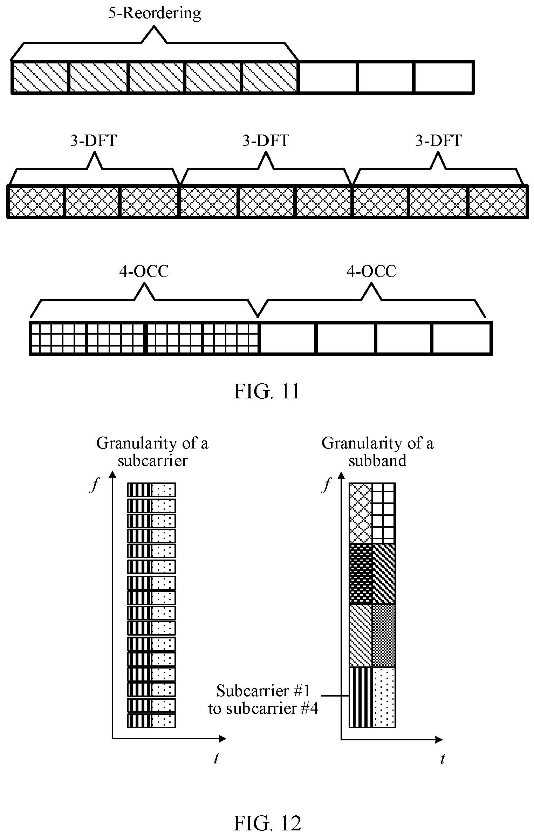

In addition, it should be noted that the network device does not limit a quantity of time domain resources on which DFT transform processing or reordering transform processing is performed, but the network device needs to limit a quantity of time domain resources on which OCC transform processing is performed. For example, the network device limits the quantity of time domain resources on which the OCC transform processing is performed to an even number. For example, FIG. 11 shows quantities of time domain resources corresponding to different types of transform processing. As shown in FIG. 11, a quantity of time domain resources on which the DFT transform processing is performed may be 3, the quantity of time domain resources on which the reordering transform processing is performed may be 5, and the quantity of time domain resources on which the OCC transform processing is performed may be 4. Certainly, the foregoing description is merely an example of the quantities of time domain resources corresponding to different types of transform processing. The foregoing plurality of types of transform processing may alternatively correspond to another quantity of time domain resources. This is not limited in this application.

The frequency domain granularity of the transform processing may include a subcarrier granularity and/or a subband granularity. The subband includes two or more subcarriers.

For example, FIG. 12 is an example diagram of a subcarrier granularity and a subband granularity. As shown in FIG. 12, a horizontal axis may represent an index value of an OFDM symbol, and a vertical axis represents an index value of a subcarrier or an index value of a subband. Each grid in a left part of FIG. 12 represents one subcarrier. In this case, there is one first subcarrier. For example, the first subcarrier is a subcarrier #1, so that the network device may sequentially map a modulation symbol in the second modulation symbol sequence to a time domain symbol corresponding to the subcarrier #1. Each grid in a right part of FIG. 12 represents one subband. One subband may include four subcarriers. In this case, there are four first subcarriers. For example, the first subcarriers are a subcarrier #1 to a subcarrier #4, so that the network device may sequentially map modulation symbols in the second modulation symbol sequence to time domain symbols corresponding to the subcarrier #1 to the subcarrier #4.

Certainly, the foregoing description is merely an example of the subband, and the subband may further include another quantity of subcarriers. Generally, a quantity of subcarriers included in the subband is less than or equal to a quantity of subcarriers configured for a channel.

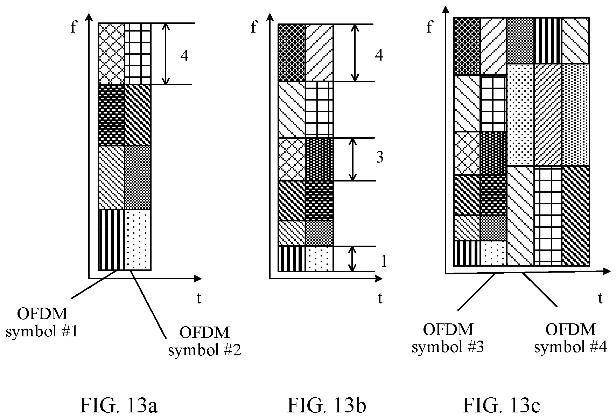

It can be learned from the foregoing related descriptions of the "subband" that the subband includes two or more subcarriers. However, quantities of subcarriers included in a plurality of subbands on which the transform processing is performed may be the same or different. FIG. 13a, FIG. 13b, and FIG. 13c are diagrams of quantities of subcarriers included in subbands. When each subband on which the transform processing is performed includes a same quantity of subcarriers, the network device may divide all subcarriers allocated to a channel into P subbands each having R subcarriers. In other words, a product of the quantity P of subbands and the quantity R of subcarriers is equal to a quantity of subcarriers allocated by the network device to the channel. For example, as shown in FIG. 13a, the network device may divide all subcarriers allocated to the channel into four subbands each having four subcarriers. When subbands on which the transform processing is performed include different quantities of subcarriers, the network device may divide all subcarriers allocated to a channel into O subbands, where a sum of quantities of subcarriers included in the O subbands is equal to a quantity of subcarriers allocated by the network device to the channel. As shown in FIG. 13b, the O subbands include two subbands each having four subcarriers, two subbands each having three subcarriers, and two subbands each having one subcarrier.

However, subband division manners of different OFDM symbols may be the same or different. As shown in FIG. 13a, subband division manners of different OFDM symbols are the same. For example, a subband division manner corresponding to an OFDM symbol #1 is the same as a subband division manner corresponding to an OFDM symbol #2. As shown in FIG. 13c, subband division manners of different OFDM symbols are different. For example, a subband division manner corresponding to an OFDM symbol #3 is different from a subband division manner corresponding to an OFDM symbol #4.

It may be understood that the network device may perform the transform processing at a subcarrier granularity, so that the network device may perform subsequent transform processing in a refined manner. Because the subband may include two or more subcarriers, when the network device performs the transform processing at a subband granularity, a quantity of times that the network device performs the transform processing can be reduced, thereby improving efficiency of the transform processing.

Whether the transform processing is performed on the time domain symbol that carries the PTRS may also be understood as whether the time domain symbol that carries the PTRS is located in the first modulation symbol sequence.

Optionally, when a time domain density of the PTRS is 1, the transform processing parameter includes performing the transform processing on the time domain symbol that carries the PTRS, that is, when the time domain density of the PTRS is 1, a transformed time domain resource includes an OFDM symbol that carries the PTRS; or when the time domain density of the PTRS is not 1, the transform processing parameter includes skipping performing transform processing on the time domain symbol that carries the PTRS, that is, when the time domain density of the PTRS is not 1, the transformed time domain resource does not include the OFDM symbol that carries the PTRS.

It may be understood that, when the time domain density of the PTRS is 1, even if the network device performs the transform processing on the time domain symbol that carries the PTRS, no disruption is caused in the time domain symbol that carries the PTRS. Therefore, when the time domain density of the PTRS is 1, the transform processing parameter includes performing the transform processing on the time domain symbol that carries the PTRS, so that the network device can also perform the transform processing on the time domain symbol that carries the PTRS, to further mitigate phase noise power fluctuations between time domain symbols, thereby better ensuring signal demodulation performance. When the time domain density of the PTRS is not 1, if the network device performs the transform processing on the time domain symbol that carries the PTRS, it is likely to cause disruption in the time domain symbol that carries the PTRS. Therefore, when the time domain density of the PTRS is not 1, the transform processing parameter includes skipping performing the transform processing on the time domain symbol that carries the PTRS. This can avoid the disruption in the time domain symbol that carries the PTRS.

In addition, it should be noted that, when the network device performs the transform processing on the time domain symbol that carries the PTRS, the terminal also needs to perform the transform processing on a signal received from the network device. However, before the terminal performs the transform processing on the signal, the terminal needs to reserve a time domain resource that carries the PTRS, or introduce a virtual PTRS into the time domain resource, to avoid disruption in the subsequent transform processing performed by the terminal. Conversely, when the network device skips performing the transform processing on the time domain symbol that carries the PTRS, the terminal does not need to reserve the time domain resource for the PTRS before performing the transform processing on the signal, and directly performs the transform processing.

The quantity of time-frequency resources on which the transform processing is performed may be represented based on a quantity of subcarriers and a quantity of OFDM symbols, or a quantity of subbands and a quantity of OFDM symbols.

Optionally, the quantity of subcarriers or subbands may be the same as or different from the quantity of OFDM symbols. For example, the quantity of subcarriers or subbands is an integer multiple of the quantity of OFDM symbols. This is not limited in this application.

It may be understood that, a dimension in which the network device performs the transform processing is generally the same as the quantity of OFDM symbols on which the transform processing is performed. Therefore, if a quantity of subcarriers or subbands on which the transform processing is performed in a time-frequency resource block is an integer multiple of a quantity of OFDM symbols on which the transform processing is performed in the time-frequency resource block, the network device may perform the transform processing on the entire time-frequency resource block, so that phase noise power fluctuations between time domain symbols can be mitigated as much as possible, thereby reducing, as much as possible, negative impact of interference caused by phase noise on signal demodulation performance and better ensuring the signal demodulation performance.

It can be learned from the foregoing related descriptions of the "time domain symbol that carries the PTRS" that, the transform processing may or may not be performed on the time domain symbol that carries the PTRS. In view of this, when determining the quantity of OFDM symbols, the network device needs to consider whether the transform processing is performed on the time domain symbol that carries the PTRS. Specifically, when the transform processing is performed on the time domain symbol that carries the PTRS, the network device may determine the quantity of OFDM symbols as a value that is exactly divisible by a quantity of OFDM symbols configured for a channel, and the quantity of OFDM symbols further needs to be within a range of [2, Lmax], where Lmax is a maximum quantity, reported by the terminal, of OFDM symbols that can be processed.

When the transform processing is not performed on the time domain symbol that carries the PTRS, the network device may determine the quantity of OFDM symbols as a value that is exactly divisible by a first difference, and the quantity of OFDM symbols further needs to be within a range of [2, Lmax], where the first difference is a difference between the quantity of OFDM symbols configured for the channel and a quantity of time domain symbols that carry the PTRS, and the quantity of time domain symbols that carry the PTRS may be a product of a quantity of PTRS groups and a quantity of sampling points included in each PTRS group, or the quantity of time domain symbols that carry the PTRS may be determined based on the time domain density L_{PTRS}.

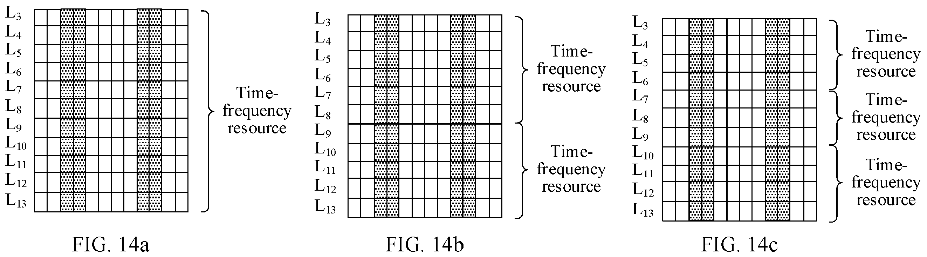

Optionally, for one signal, the network device may divide at least one time-frequency resource, and different time-frequency resources may correspond to a same quantity of OFDM symbols or different quantities of OFDM symbols. For a slot with a normal cyclic prefix (cyclic prefix, CP), generally, the slot includes 14 OFDM symbols. In this way, the network device may set the quantity of OFDM symbols to any value less than or equal to 14. For a slot with an extended CP, generally, the slot includes 12 OFDM symbols. In this way, the network device may set the quantity of OFDM symbols to any value less than or equal to 12. When the network device divides one time-frequency resource, a quantity of OFDM symbols may be a quantity of OFDM symbols configured by the network device for the channel. For example, as shown in FIG. 14a, the quantity of OFDM symbols is 11. When the network device divides one time-frequency resource, a sum of quantities of OFDM symbols corresponding to the plurality of time-frequency resources is equal to the quantity of OFDM symbols configured by the network device for the channel. For example, as shown in FIG. 14b, the quantity of OFDM symbols may be 6 or 7. For another example, as shown in FIG. 14c, the quantity of OFDM symbols may be 4 or 3.

Further, optionally, the network device may indicate, in a bitmap (bitmap) form, the quantity of OFDM symbols corresponding to the time-frequency resource. In other words, a quantity of OFDM symbols corresponding to at least one time-frequency resource may be indicated by indicating a start symbol Is and/or an end symbol Js of each symbol set. For example, when the network device divides one time-frequency resource, and a quantity of OFDM symbols corresponding to the time-frequency resource is 11, the network device may determine a bitmap of the quantity of OFDM symbols corresponding to the time-frequency resource as [10000000000]. For another example, when the network device divides a plurality of time-frequency resources, and a quantity of OFDM symbols corresponding to the time-frequency resources is 6 or 7, the network device may determine a bitmap of the quantity of OFDM symbols corresponding to the plurality of time-frequency resources as [10000100000]. For another example, when the network device divides a plurality of time-frequency resources, and a quantity of OFDM symbols corresponding to the time-frequency resources is 3 or 4, the network device may determine a bitmap of the quantity of OFDM symbols corresponding to the plurality of time-frequency resources as [10010001000].

Certainly, the foregoing description is merely an example of indicating, by the network device, the quantity of OFDM symbols corresponding to the time-frequency resource. The network device may alternatively indicate, in another manner, the quantity of OFDM symbols corresponding to the time-frequency resource. For example, the network device indicates only a position of an end symbol and/or a position of an end symbol. This is not limited in this application.

Certainly, the foregoing description is merely an example of the transform processing parameter. The transform processing parameter may further include another parameter, for example, a transform matrix. This is not limited in this application.

The transform matrix is used for performing the transform processing on the first modulation symbol sequence. In other words, the network device may perform the transform processing on the first modulation symbol sequence based on the transform matrix. Assuming that the first modulation symbol sequence is dₖ, and the transform matrix is Fₖ, the network device multiplies the first modulation symbol sequence dₖ by the transform matrix Fₖ, to obtain the second modulation symbol sequence xₖ.

Optionally, different types of transform processing may correspond to different reordering transform matrices. For example, when the type of the transform processing is a type of DFT transform processing, the transform matrix may be a DFT transform matrix, where each element in the DFT transform matrix satisfies a preset calculation formula. Specifically, each element in the DFT transform matrix may satisfy the following Formula 5: ${\left[{F}_{s}\right]}_{mn} = {e}^{- j 2 π \frac{mn}{{L}_{s}}}$

Fₛ is the DFT transform matrix, [Fₛ]ₘₙ represents an element corresponding to an m^{th} row and an n^{th} column of the DFT transform matrix, and Lₛ is a quantity of time domain resources on which the transform processing is performed. m and n are both positive integers.

For example, assuming that the DFT transform matrix is a 3×3 DFT transform matrix, the network device may combine m (for example, 0, 1, 2) and n (for example, 0, 1, 2), and substitute m and n obtained through combination into Formula 5, to obtain values of elements in the 3×3 DFT transform matrix. The network device determines the 3×3 DFT transform matrix based on the values of the elements in the 3×3 DFT transform matrix. For example, the 3×3 DFT transform matrix may be $\left[\begin{matrix}1 & 1 & 1 \\ 1 & - \frac{1}{2} - \frac{\sqrt{3}}{2} j & - \frac{1}{2} + \frac{\sqrt{3}}{2} j \\ 1 & - \frac{1}{2} + \frac{\sqrt{3}}{2} j & - \frac{1}{2} - \frac{\sqrt{3}}{2} j\end{matrix}\right]$. Certainly, the foregoing description is merely an example of the 3×3 DFT transform matrix, and the 3×3 DFT transform matrix may alternatively be another matrix. This is not limited in this application.

For another example, when the type of the transform processing is a type of OCC transform processing, the transform matrix may be an OCC transform matrix, where the OCC matrix may be a symmetric matrix including 1 or -1.

For example, assuming that the OCC transform matrix is a 4×4 OCC transform matrix, the network device may perform permutation and combination on 1 and -1 according to a symmetry rule, to obtain the OCC transform matrix. For example, the 4×4 OCC transform matrix may be $\left[\begin{matrix}1 & 1 & 1 & 1 \\ 1 & 1 & - 1 & - 1 \\ 1 & - 1 & 1 & - 1 \\ 1 & - 1 & - 1 & 1\end{matrix}\right]$. Certainly, the foregoing description is merely an example of the 4×4 OCC transform matrix, and the 4×4 OCC transform matrix may alternatively be another matrix. This is not limited in this application.

For another example, when the type of the transform processing is a type of reordering transform processing, the transform matrix may be a reordering transform matrix, where the reordering transform matrix may be a matrix including index values of modulation symbols.

For example, assuming that the reordering transform matrix is a 5×5 transform matrix, the network device may perform permutation and combination on 0 and 1, to obtain the reordering transform matrix. For example, the 5×5 reordering transform matrix may be $\left[\begin{matrix}0 & 1 & 0 & 0 & 0 \\ 0 & 0 & 1 & 0 & 0 \\ 0 & 0 & 0 & 1 & 0 \\ 0 & 0 & 0 & 0 & 1 \\ 1 & 0 & 0 & 0 & 0\end{matrix}\right]$. Certainly, the foregoing description is merely an example of the 5×5 reordering transform matrix, and the 5×5 reordering transform matrix may alternatively be another matrix. This is not limited in this application.

Optionally, a dimension La of the reordering transform matrix may be set with reference to the quantity of time domain resources on which the transform processing is performed. For example, the network device sets the dimension La of the reordering transform matrix to the quantity of OFDM symbols on which the transform processing is performed.

It can be learned from the foregoing related descriptions of the "transform matrix" that the transform processing parameter may include the transform matrix, so that the network device can perform the transform processing on the first modulation symbol sequence based on the transform matrix. However, there may be a plurality of methods used by the network device to indicate the transform matrix. The following uses an example in which the transform matrix is a reordering transform matrix to describe a method used by the network device to indicate the reordering transform matrix. There may be the following three methods used by the network device to indicate the reordering transform matrix.

Method 1: The network device indicates each reordering element (that is, La×La reordering elements) in the reordering transform matrix.

It should be noted that Method 1 is applicable to all types of reordering transform matrices.

Method 2: The network device indicates reordering elements (that is, (La+1)La/2 reordering elements) in an upper-left part or a lower-right part of the reordering transform matrix.

For example, it is assumed that the reordering transform matrix is a 5×5 reordering transform matrix. In Method 2, an arrangement order from left to right is used as an example. The network device may indicate five reordering elements in a 1^{st} row, a 1^{st} reordering element to a 4^{th} reordering element in a 2^{nd} row, a 1^{st} reordering element to a 3^{rd} reordering element in a 3^{rd} row, a 1^{st} reordering element and a 2^{nd} reordering element in a 4^{th} row, and a 1^{st} reordering element in a 5^{th} row. Alternatively, the network device may indicate a 5^{th} reordering element in a 1^{st} row, a 4^{th} reordering element and a 5^{th} reordering element in a 2^{nd} row, a 3^{rd} reordering element to a 5^{th} reordering element in a 3^{rd} row, a 2^{nd} reordering element to a 5^{th} reordering element in a 4^{th} row, and a 5^{th} reordering element in a 5^{th} row.

It should be noted that Method 2 is applicable to a reordering transform matrix in which a reordering element in an upper-left part and a reordering element in a lower-right part are symmetrical to each other.

It may be understood that the reordering element in the upper-left part and the reordering element in the lower-right part in the reordering transform matrix are symmetrical to each other. In this way, the network device may indicate only the reordering element in the upper-left part or the reordering element in the lower-right part, without a need to indicate all reordering elements, thereby reducing indication overheads.

Method 3: The network device indicates Lc reordering elements in the reordering transform matrix, where the Lc reordering elements include a reordering element that is not an inverse transform of another reordering element, and either of two reordering elements that are inverse transforms of each other, and Lc is a positive integer less than La.

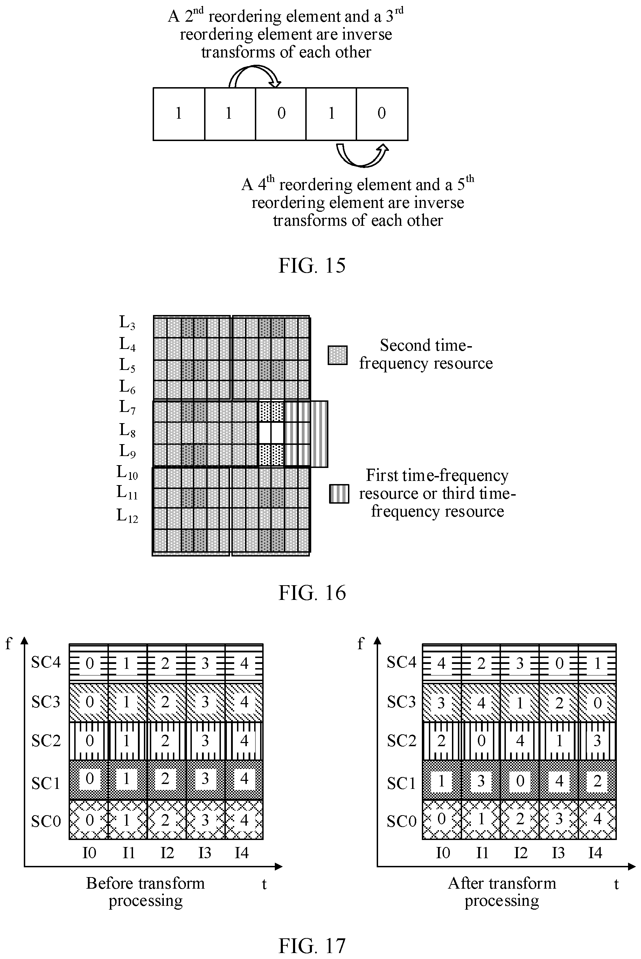

For example, FIG. 15 is a diagram of reordering elements that are inverse transforms of each other. As shown in FIG. 15, an arrangement order from left to right is used as an example. A 1^{st} reordering element is not an inverse transform of another element, a 2^{nd} reordering element and a 3^{rd} reordering element are inverse transforms of each other, and a 4^{th} reordering element and a 5^{th} reordering element are inverse transforms of each other. In view of this, the network device may indicate only the 1^{st} reordering element, the 2^{nd} reordering element, and the 4^{th} reordering element; or the network device may indicate only the 1^{st} reordering element, the 3^{rd} reordering element, and the 5^{th} reordering element.

It should be noted that Method 3 is applicable to a reordering transform matrix formed based on a principle of compact interleaving.

It may be understood that, there is a correspondence between the reordering elements in the reordering transform matrix that are inverse transforms of each other. In this way, the network device may indicate only a part of the reordering elements (that is, the Lc reordering elements), without a need to indicate all reordering elements, thereby reducing indication overheads.

In a possible implementation, when a quantity of subcarriers or subbands on which the transform processing is performed is greater than 2, the network device may configure transform matrices corresponding to different subcarriers or subbands to be orthogonal matrices to each other. In other words, the transform matrices corresponding to different subcarriers or subbands may be inverse transform matrices of each other.

For example, a subcarrier is used as an example for description. Assuming that the quantity of subcarriers on which the transform processing is performed is 5: a transform matrix corresponding to a 1^{st} subcarrier and a transform matrix corresponding to another subcarrier may not be orthogonal matrices to each other, a reordering transform matrix corresponding to a 2^{nd} subcarrier and a reordering transform matrix corresponding to a 3^{rd} subcarrier may be orthogonal matrices to each other, and a reordering transform matrix corresponding to a 4^{th} subcarrier and a reordering transform matrix corresponding to a 5^{th} subcarrier may be orthogonal matrices to each other.

For example, ${F}_{0} = \left[\begin{matrix}1 & 0 & 0 & 0 & 0 \\ 0 & 1 & 0 & 0 & 0 \\ 0 & 0 & 1 & 0 & 0 \\ 0 & 0 & 0 & 1 & 0 \\ 0 & 0 & 0 & 0 & 1\end{matrix}\right]$, where F₀ is a reordering transform matrix corresponding to the 1^{st} subcarrier.${F}_{1} = \left[\begin{matrix}0 & 1 & 0 & 0 & 0 \\ 0 & 0 & 0 & 1 & 0 \\ 1 & 0 & 0 & 0 & 0 \\ 0 & 0 & 0 & 0 & 1 \\ 0 & 0 & 1 & 0 & 0\end{matrix}\right] = {F}_{2}^{T}$, where F₁ is a reordering transform matrix corresponding to the 2^{nd} subcarrier, and F₂ is a reordering transform matrix corresponding to the 3^{rd} subcarrier.${F}_{3} = \left[\begin{matrix}0 & 0 & 0 & 1 & 0 \\ 0 & 0 & 0 & 0 & 1 \\ 0 & 1 & 0 & 0 & 0 \\ 0 & 0 & 1 & 0 & 0 \\ 1 & 0 & 0 & 0 & 0\end{matrix}\right] = {F}_{4}^{T}$, where F₃ is a reordering transform matrix corresponding to the 4^{th} subcarrier, and F₄ is a reordering transform matrix corresponding to the 5^{th} subcarrier.

The following describes S1002.

In some possible implementations, the network device may perform the transform processing on all or a part of modulation symbol sequences.

For example, when a quantity of time domain resources on which the transform processing is performed is equal to a quantity of frequency domain resources (for example, a quantity of subcarriers or subbands) on which the transform processing is performed, the network device may perform transform processing on a modulation symbol sequence corresponding to a time-frequency resource (denoted as a second time-frequency resource).

For another example, when a quantity of time domain resources on which the transform processing is performed is not equal to a quantity of frequency domain resources on which the transform processing is performed, the network device further needs to determine whether the quantity of frequency domain resources on which the transform processing is performed is less than or equal to a quantity threshold. Further, when the quantity of the frequency domain resources on which the transform processing is performed is greater than the quantity threshold, the network device may also perform the transform processing on a modulation symbol sequence corresponding to a time-frequency resource (denoted as a third time-frequency resource); and when the quantity of the frequency domain resources on which the transform processing is performed is less than or equal to the quantity threshold, the network device may skip performing transform processing on a modulation symbol sequence corresponding to a time-frequency resource (denoted as a first time-frequency resource).

For example, FIG. 16 is a diagram of division of time-frequency resources on which transform processing is performed. As shown in FIG. 16, a quantity of time domain resources of a time-frequency resource a is 5, and a quantity of frequency domain resources of the time-frequency resource a is also 5. In this case, the time-frequency resource a may be denoted as a second time-frequency resource. In other words, when a quantity of time domain resources of one time-frequency resource is equal to a quantity of frequency domain resources of the time-frequency resource, the time-frequency resource may be denoted as a second time-frequency resource. In this way, the network device may perform the transform processing on a modulation symbol sequence corresponding to the second time-frequency resource.

It is assumed that the quantity threshold is 1. As shown in FIG. 16, a quantity of frequency domain resources of a time-frequency resource b is 2. In this case, the time-frequency resource b may be denoted as a third time-frequency resource. In other words, when a quantity of time domain resources of one time-frequency resource is not equal to a quantity of frequency domain resources of the time-frequency resource, and the quantity of frequency domain resources of the time-frequency resource is greater than the quantity threshold, the time-frequency resource may be denoted as a third time-frequency resource. In this way, the network device may perform the transform processing on a modulation symbol sequence corresponding to the third time-frequency resource.

It is assumed that the quantity threshold is 2. As shown in FIG. 16, a quantity of frequency domain resources of a time-frequency resource b is also 2. In this case, the time-frequency resource b may be denoted as a first time-frequency resource. In other words, when a quantity of time domain resources of one time-frequency resource is not equal to a quantity of frequency domain resources of the time-frequency resource, and the quantity of the frequency domain resources of the time-frequency resource is less than or equal to the quantity threshold, the time-frequency resource may be denoted as a first time-frequency resource. In this way, the network device may skip performing the transform processing on a modulation symbol sequence corresponding to the first time-frequency resource.

It may be understood that, when the quantity of time domain resources on which the transform processing is performed is equal to the quantity of frequency domain resources on which the transform processing is performed, or the quantity of time domain resources on which the transform processing is performed is not equal to the quantity of frequency domain resources on which the transform processing is performed, and the quantity of frequency domain resources on which the transform processing is performed is greater than the quantity threshold, the network device may perform the transform processing on the modulation symbol sequence corresponding to the time-frequency resource (that is, the second time-frequency resource or the third time-frequency resource), to perform reordering processing on as many time-frequency resources as possible. In this way, phase noise power fluctuations between time domain symbols can be mitigated as much as possible, thereby reducing impact of interference caused by phase noise on signal demodulation performance and better ensuring the signal demodulation performance.

However, if the quantity of time domain resources on which the transform processing is performed is not equal to the quantity of frequency domain resources on which the transform processing is performed, and the quantity of frequency domain resources on which the transform processing is performed is less than or equal to the quantity threshold, it may indicate that the time-frequency resource (that is, the first time-frequency resource) includes a few frequency domain resources. However, for the first time-frequency resource including a few frequency domain resources, overall impact is small. Therefore, the network device may skip performing the transform processing on the first time-frequency resource, so that an effect of mitigating phase noise power fluctuations between time domain symbols is not greatly affected, and processing overheads of the network device can be reduced.

In a possible implementation, one modulation symbol block may include at least one modulation symbol sequence. The first modulation symbol sequence may be any one or more modulation symbol sequences in the modulation symbol block. When a time domain signal includes a plurality of modulation symbol sequences, the network device may sequentially perform the transform processing on each modulation symbol sequence based on the transform processing parameter to obtain a plurality of modulation symbol sequences through the transform processing, and map the modulation symbol sequences obtained through the transform processing to time domain symbols corresponding to subcarriers.

For example, FIG. 17 is a diagram of a process of transform processing. As shown in FIG. 17, a vertical axis represents frequency domain (f), and a horizontal axis represents time domain (t). It is assumed that the first subcarrier is a subcarrier SC1 recorded in FIG. 17, and the first modulation symbol sequence may be a modulation symbol sequence {*a₀*, *a₁*, *a₂*, *a₃*, *a₄*} corresponding to a subcarrier SC1. The network device performs the transform processing on the first modulation symbol sequence to obtain the second modulation symbol sequence, for example, {*b₁*, *b₃*, *b₀*, *b₄*, *b₂*} shown in FIG. 17, and sequentially maps modulation symbols in the second modulation symbol sequence to time domain symbols L0 to L4 corresponding to the subcarrier SC1. The network device may sequentially perform, based on the transform processing parameter, the transform processing on modulation symbol sequences corresponding to a subcarrier SC0, a subcarrier SC2, a subcarrier SC3, a subcarrier SC4, to obtain modulation symbol sequences corresponding to the subcarrier SC0, the subcarrier SC2, the subcarrier SC3, and the subcarrier SC4 through the transform processing, and map the second modulation symbol sequences that correspond to the subcarrier SC0, the subcarrier SC2, the subcarrier SC3, and the subcarrier SC4 and that are obtained through the transform processing to time domain symbols corresponding to the subcarrier SC0, the subcarrier SC2, the subcarrier SC3, and the subcarrier SC4.

Further, after the network device performs the transform processing on the modulation symbol sequences based on the transform processing parameter, the network device may disrupt ordering positions of the time domain symbols corresponding to the subcarriers, so that the time domain symbols may carry a modulation symbol in each of other time domain symbols. In other words, a modulation symbol in one time domain symbol is mapped to another time domain symbol in an evenly distributed manner. For example, as shown in FIG. 17, an OFDM symbol I0 obtained through the transform processing includes one modulation symbol in the OFDM symbol I0 and one modulation symbol in each of OFDM symbols I1 to I4. In this way, phase noise power fluctuations between time domain symbols can be mitigated to a maximum extent, and impact of interference caused by large phase noise fluctuations on signal demodulation performance can be mitigated to a maximum extent.

Optionally, when a transmission waveform of a to-be-sent signal is CP-OFDM, an operation of generating, by the network device, the to-be-sent signal may include: source bit generation, modulation, layer mapping, transform processing, PTRS generation, mapping, precoding, subcarrier mapping, IFFT, and CP addition processing. In this case, the first modulation symbol sequence is a modulation symbol sequence obtained through layer mapping processing. In this way, after performing the layer mapping processing on the modulation symbol sequence, the network device may perform the transform processing on the first modulation symbol sequence obtained through the layer mapping processing to obtain the second modulation symbol sequence, and sequentially map the second modulation symbol sequence to the N consecutive time domain symbols corresponding to the first subcarrier. The network device may perform processing such as PTRS generation, mapping, precoding, subcarrier mapping, IFFT, and CP addition processing on the time domain symbols obtained through mapping.

When a transmission waveform of a to-be-sent signal is DFT-s-OFDM, an operation of generating, by the network device, the to-be-sent signal may include: source bit generation, modulation, layer mapping, transform processing, PTRS generation, DFT, mapping, precoding, subcarrier mapping, IFFT, and CP addition processing. In this case, the first modulation symbol sequence is a modulation symbol sequence obtained through layer mapping processing. In this way, after performing the layer mapping processing on the modulation symbol sequence, the network device may perform the transform processing on the first modulation symbol sequence obtained through the layer mapping processing to obtain the second modulation symbol sequence, and sequentially map the second modulation symbol sequence to the N consecutive time domain symbols corresponding to the first subcarrier. The network device may perform processing such as PTRS generation, DFT, mapping, precoding, subcarrier mapping, IFFT, and CP addition processing on the time domain symbols obtained through mapping.

Optionally, the first subcarrier may include at least one subcarrier. A quantity of first subcarriers is not limited in this application.

In a possible implementation, before S1001, the network device may determine in advance whether the transform processing parameter needs to be used for performing the transform processing on the first modulation symbol sequence, and when the transform processing parameter needs to be used for performing the transform processing on the first modulation symbol sequence, the network device performs S1001. The network device may determine, based on at least one of an index value of a modulation and coding scheme (modulation and coding scheme, MCS) corresponding to the first modulation symbol sequence, a quantity of code blocks carried in an OFDM symbol in a first modulation symbol, or an EVM, whether the transform processing needs to be performed on the first modulation symbol sequence based on the transform processing parameter. In view of this, there may be the following four implementations in which the network device determines whether the transform processing needs to be performed on the first modulation symbol sequence based on the transform processing parameter: Implementation 1: The network device determines, based on the index value of the MCS corresponding to the first modulation symbol sequence, whether the transform processing needs to be performed on the first modulation symbol sequence based on the transform processing parameter. Implementation 2: The network device determines, based on the quantity of code blocks carried in the OFDM symbol in the first modulation symbol, whether the transform processing needs to be performed on the first modulation symbol sequence based on the transform processing parameter. Implementation 3: The network device determines, based on the EVM, whether the transform processing needs to be performed on the first modulation symbol sequence based on the transform processing parameter. Implementation 4: The terminal notifies the network device whether the transform processing needs to be performed on the first modulation symbol sequence based on the transform processing parameter.

Implementation 1: The network device determines, based on the index value of the MCS corresponding to the first modulation symbol sequence, whether the transform processing needs to be performed on the first modulation symbol sequence based on the transform processing parameter. The foregoing Implementation 1 may be implemented through the following step 1.

Step 1: When the index value of the MCS corresponding to the first modulation symbol sequence is greater than or equal to an index threshold, the network device determines that the transform processing needs to be performed on the first modulation symbol sequence.

Optionally, when the index value of the MCS corresponding to the first modulation symbol sequence is less than the index threshold, the network device determines that the transform processing does not need to be performed on the first modulation symbol sequence.

It is assumed that the index threshold is MCS_{TD} configured by the network device. As shown in Table 1 below, when the index value MCS of the MCS corresponding to the first modulation symbol sequence is greater than or equal to the index threshold MCS_{TD}, the network device determines that the transform processing needs to be performed on the first modulation symbol sequence. Further, in this case, the network device may determine that a state of the transform processing is a first state, where the first state (that is, ON) indicates that the transform processing needs to be performed on the first modulation symbol sequence.

In addition, when the index value MCS of the MCS corresponding to the first modulation symbol sequence is less than the index threshold MCS_{TD}, the network device determines that the transform processing does not need to be performed on the first modulation symbol sequence. Further, in this case, the network device may determine that the state of the transform processing is a second state, where the second state (that is, OFF) indicates that the transform processing does not need to be performed on the first modulation symbol sequence.

**Table 1**

| *MCS* index | Transform state |
|---|---|
| *MCS* < *MCS_{TD}* | OFF |
| *MCS_{TD}* ≤ *MCS* | ON |

It may be understood that, when the index value MCS of the MCS corresponding to the first modulation symbol sequence is low, ICI caused by phase noise is usually small. In view of this, in this case, the network device may not need to perform the transform processing on the first modulation symbol sequence, thereby reducing device overheads. However, when the index value MCS of the MCS corresponding to the first modulation symbol sequence is high, the ICI caused by the phase noise is usually large. In view of this, in this case, the network device needs to perform the transform processing on the first modulation symbol sequence, thereby reducing the ICI caused by the phase noise and ensuring signal demodulation performance.

Implementation 2: The network device determines, based on the quantity of code blocks carried in the OFDM symbol in the first modulation symbol, whether the transform processing needs to be performed on the first modulation symbol sequence based on the transform processing parameter. The foregoing Implementation 2 may be implemented through the following step 2.

Step 2: When the quantity of code blocks carried in the OFDM symbol in the first modulation symbol is greater than or equal to a code block quantity threshold, the network device determines that transform processing between time domain symbols needs to be performed on the first modulation symbol.

Optionally, when the quantity of code blocks carried in the OFDM symbol in the first modulation symbol is less than the code block quantity threshold, the network device determines that the transform processing between time domain symbols does not need to be performed on the first modulation symbol.

It is assumed that the code block quantity threshold is Q*_{TD}* configured by the network device. As shown in Table 2 below, when the quantity Q of code blocks carried in the OFDM symbol in the first modulation symbol is greater than or equal to the code block quantity threshold Q*_{TD}*, the network device determines that the transform processing needs to be performed on the first modulation symbol sequence. Further, in this case, the network device may determine that a state of the transform processing is a first state, where the first state (that is, ON) indicates that the transform processing needs to be performed on the first modulation symbol sequence. In addition, when the quantity Q of code blocks carried in the OFDM symbol in the first modulation symbol is less than the code block quantity threshold Q*_{TD}*, the network device determines that the transform processing does not need to be performed on the first modulation symbol sequence. Further, in this case, the network device may determine that the state of the transform processing is a second state, where the second state (that is, OFF) indicates that the transform processing does not need to be performed on the first modulation symbol sequence.

**Table 2**

| Code block quantity index | Transform state |
|---|---|
| Q < Q*_{TD}* | OFF |
| Q*_{TD}* ≤ *Q* | ON |

It may be understood that, because a BLER is an important indicator for evaluating communication transmission quality, a larger quantity of code blocks carried in the OFDM symbol in the first modulation symbol may indicate greater impact of ICI caused by residual phase noise on the BLER indicator. In view of this, in this case, the network device needs to perform the transform processing on the first modulation symbol sequence, thereby reducing the ICI caused by the phase noise and ensuring demodulation performance. However, a smaller quantity of code blocks carried in the OFDM symbol in the first modulation symbol may indicate smaller impact of the ICI caused by the residual phase noise on the BLER. In view of this, in this case, the network device may not need to perform the transform processing on the first modulation symbol sequence, thereby reducing device overheads.

Implementation 3: The network device determines, based on the EVM, whether the transform processing needs to be performed on the first modulation symbol sequence based on the transform processing parameter. The foregoing Implementation 3 may be implemented through the following step 3 to step 5.

Step 3: The network device obtains EVMs of a plurality of OFDM symbols.

The plurality of OFDM symbols include an OFDM symbol included in each of at least one slot.

In a possible implementation, the terminal may send fifth indication information to the network device. Correspondingly, the network device receives the fifth indication information from the terminal. The fifth indication information indicates the EVMs of the plurality of OFDM symbols.

Optionally, in a process in which the terminal determines the EVMs of the plurality of OFDM symbols, the terminal may perform phase noise compensation on the plurality of OFDM symbols in advance based on the foregoing Scheme 1, and determine EVMs of the plurality of OFDM symbols on which the phase noise compensation is performed as the EVMs of the plurality of OFDM symbols.

Optionally, in a process in which the terminal determines the EVMs of the plurality of OFDM symbols, the terminal may directly determine the EVMs of the plurality of OFDM symbols.

Step 4: The network device determines an EVM difference between every two of at least one OFDM symbol based on an EVM of an OFDM symbol included in each of the at least one slot, and determines a difference between a largest value and a smallest value of the EVM difference in at least one EVM difference as a target EVM.

Step 5: When the target EVM is greater than or equal to an EVM threshold, the network device determines that the transform processing between time domain symbols needs to be performed on the first modulation symbol.

Optionally, when the target EVM is less than the EVM threshold, the network device determines that the transform processing between time domain symbols does not need to be performed on the first modulation symbol.

For example, it is assumed that the EVM threshold is EVM*_{TD}* configured by the network device. As shown in Table 3 below, when the target EVM is greater than or equal to the EVM threshold EVM*_{TD}*, the network device determines that the transform processing needs to be performed on the first modulation symbol sequence. Further, in this case, the network device may determine that a state of the transform processing is a first state, where the first state (that is, ON) indicates that the transform processing needs to be performed on the first modulation symbol sequence. In addition, when the target EVM is less than the EVM threshold EVM*_{TD}*, the network device determines that the transform processing does not need to be performed on the first modulation symbol sequence. Further, in this case, the network device may determine that the state of the transform processing is a second state, where the second state (that is, OFF) indicates that the transform processing does not need to be performed on the first modulation symbol sequence.

**Table 3**

| Target EVM | Transform state |
|---|---|
| EVM < EVM*_{TD}* | OFF |
| EVM*_{TD}* ≤ EVM | ON |

It may be understood that, because the EVM may directly represent a degree to which a signal is affected by phase noise, a larger target EVM may indicate greater impact of ICI caused by residual phase noise on the signal. In view of this, in this case, the network device needs to perform the transform processing on the first modulation symbol sequence, thereby reducing the ICI caused by the phase noise and ensuring demodulation performance. However, a smaller target EVM may indicate smaller impact of the ICI caused by the residual phase noise on the signal. In view of this, in this case, the network device may not need to perform the transform processing on the first modulation symbol sequence, thereby reducing device overheads.

Optionally, in the foregoing Implementation 3, the EVM may be replaced with an SINR. In this way, Implementation 3 may be replaced with the following: The network device determines, based on the SINR, whether the transform processing needs to be performed on the first modulation symbol sequence based on the transform processing parameter. For understanding of an implementation process in which the network device determines, based on the SINR, whether the transform processing needs to be performed on the first modulation symbol sequence based on the transform processing parameter, refer to an implementation process in which the network device determines, based on the EVM, whether the transform processing needs to be performed on the first modulation symbol sequence based on the transform processing parameter. Details are not described herein again.

It should be understood that the implementations recorded in Implementation 1 to Implementation 3 may be combined with each other. In other words, the network device may determine, based on at least one of Implementation 1 to Implementation 3, whether the transform processing needs to be performed on the first modulation symbol sequence. This is not limited in this application.

Implementation 4: The terminal notifies the network device whether the transform processing needs to be performed on the first modulation symbol sequence based on the transform processing parameter. The foregoing Implementation 4 may be implemented through the following step 6.

Step 6: The terminal sends sixth indication information to the network device. Correspondingly, the network device receives the sixth indication information from the terminal.

The sixth indication information indicates that the network device needs to perform the transform processing on the first modulation symbol sequence based on the transform processing parameter.

Optionally, the sixth indication information may further indicate that the network device does not need to perform the transform processing on the first modulation symbol sequence based on the transform processing parameter.

It may be understood that, for understanding of an implementation process in which the terminal determines the sixth indication information, refer to the implementation processes recorded in the foregoing Implementation 1 to Implementation 3. Details are not described herein again.

Optionally, after the network device determines whether the transform processing needs to be performed on the first modulation symbol sequence based on the transform processing parameter, the network device may send fourth indication information to the terminal by using downlink control information or radio resource control signaling. Correspondingly, the terminal receives the fourth indication information from the network device. The fourth indication information indicates whether the network device needs to perform transform processing on the first modulation symbol sequence based on the transform processing parameter, to notify the terminal of a determining result about whether the transform processing needs to be performed on the first modulation symbol sequence based on the transform processing parameter. This facilitates the terminal subsequently performing a corresponding transform processing operation.

Further, for the fourth indication information, the network device may indicate the fourth indication information through an explicit indication or an implicit indication. Specifically, when the network device indicates the fourth indication information through the explicit indication, the fourth indication information may directly indicate, to the network device, the determining result about whether the transform processing needs to be performed on the first modulation symbol sequence based on the transform processing parameter; or when the network device indicates the fourth indication information through the implicit indication, the fourth indication information may include at least one of the following: the index value of the MCS corresponding to the first modulation symbol sequence, the quantity of code blocks carried in the OFDM symbol in the first modulation symbol, or the target EVM.

It should be noted that a priority of explicitly indicated fourth indication information is higher than a priority of implicitly indicated fourth indication information. In other words, when the terminal receives the priorities of the explicitly indicated fourth indication information and the implicitly indicated fourth indication information, the terminal may directly determine, based on an indication result of the explicitly indicated fourth indication information, a determining result about whether the transform processing needs to be performed on the first modulation symbol sequence based on the transform processing parameter, without a need to determine, based on a parameter included in the implicitly indicated fourth indication information, whether the transform processing needs to be performed on the first modulation symbol sequence based on the transform processing parameter.

In a possible implementation, as shown in S1003, the network device sends the second modulation symbol sequence to the terminal. Correspondingly, the terminal receives the third modulation symbol sequence from the network device. To ensure that the terminal can normally demodulate the third modulation symbol sequence, the terminal also needs to perform transform processing on the third modulation symbol sequence, to ensure accuracy of data obtained through demodulation. Therefore, an embodiment of this application provides another data transmission method. As shown in FIG. 10, the data transmission method may include the following S1004.

S1004: The network device may send first indication information to the terminal. Correspondingly, the terminal receives the first indication information from the network device.

The first indication information indicates that the terminal is to perform the transform processing on the third modulation symbol sequence based on the transform processing parameter to obtain a fourth modulation symbol sequence.

In other words, the network device sends the first indication information to the terminal, to indicate that the terminal also needs to perform the transform processing on the third modulation symbol sequence based on the transform processing parameter to obtain the fourth modulation symbol sequence, so as to ensure that the terminal can normally obtain through demodulation data sent by the network device.

Optionally, in addition to sending the first indication information to the terminal, the network device may further send third indication information to the terminal. Correspondingly, the terminal receives the third indication information from the network device. The third indication information indicates the transform processing parameter. In this way, the network device may explicitly notify the terminal of the transform processing parameter needed for the transform processing, so that the terminal subsequently performs the transform processing on the third modulation symbol sequence based on the transform processing parameter to obtain the fourth modulation symbol sequence.

Further, after S1004, the terminal needs to perform the transform processing on the third modulation symbol sequence based on the transform processing parameter to obtain the fourth modulation symbol sequence. In view of this, as shown in FIG. 10, the data transmission method includes the following S1005 and S1006.

S1005: The terminal obtains the transform processing parameter.

In some optional implementations, the terminal may first receive a third modulation sequence from the network device, and then obtain the transform processing parameter; or the terminal may first obtain the transform processing parameter, and then receive the third modulation sequence from the network device. In other words, a sequence of S1003 and S1005 is not limited in embodiments of this application.

S1006: The terminal performs the transform processing on the third modulation symbol sequence based on the transform processing parameter to obtain the fourth modulation symbol sequence {*d*₁, *d*₂, ... , *d*_{*N*-1}}, and sequentially maps the fourth modulation symbol sequence to the N consecutive time domain symbols corresponding to the first subcarrier.

N is an integer greater than 1.

Optionally, when a transmission waveform of a received signal is CP-OFDM, an operation of obtaining, by the terminal, data based on the received signal may include: FFT, CP processing, subcarrier demapping, multiple-input multiple-output equalization, phase noise compensation, transform processing, and demodulation.

When a transmission waveform of a received signal is DFT-s-OFDM, an operation of obtaining, by the terminal, data based on the received signal may include: FFT, CP processing, subcarrier demapping, multiple-input multiple-output equalization, inverse discrete Fourier transform (inverse discrete Fourier transform, IDFT), phase noise compensation, transform processing, and demodulation.

In the foregoing two cases, the third modulation symbol sequence is a modulation symbol sequence obtained through phase noise compensation. In this way, the terminal may perform the transform processing after performing the phase noise compensation on the modulation symbol sequence to obtain the fourth modulation symbol sequence, and sequentially map the fourth modulation symbol sequence to the N consecutive time domain symbols corresponding to the first subcarrier. The terminal may perform demodulation processing on the time domain symbols obtained through mapping, to obtain the data sent by the network device.

In a possible implementation, a transform matrix used by the terminal to perform the transform processing and a transform matrix used by the network device to perform the transform processing may be inverse transform matrices of each other. For example, the transform matrix used by the network device to perform the transform processing is Fₛ and the transform matrix used by the terminal to perform the transform processing is ${F}_{s}^{- 1}$. In other words, the transform matrix used by the terminal to perform the transform processing and the transform matrix used by the network device to perform the transform processing may satisfy the following Formula 6: ${F}_{s}^{- 1} = \frac{1}{{L}_{s}} {F}_{s}^{H}$

(·)^{H} represents conjugate transposition.

Assuming that the first modulation symbol sequence is dₖ, and the transform matrix is Fₖ, the terminal multiplies the second modulation symbol sequence xₖ by an inverse transform matrix ${F}_{k}^{- 1}$ of the transform matrix Fₖ, to obtain the first modulation symbol sequence dₖ.

It may be understood that the foregoing is only an implementation process in which the terminal performs the transform processing on the N consecutive time domain symbols corresponding to the first subcarrier. If the network device performs the transform processing on a time domain symbol corresponding to each of a plurality of subcarriers, and sends, to the terminal, the time domain symbol that corresponds to each subcarrier and that is obtained through the transform processing, the terminal also needs to correspondingly perform the transform processing on the time domain symbol corresponding to each subcarrier. For an implementation process in which the terminal performs the transform processing on the time domain symbol corresponding to each subcarrier, refer to the foregoing descriptions at corresponding positions. Details are not described herein again.

This application provides a data transmission method. A terminal may receive, from a network device, a third modulation sequence corresponding to a second modulation symbol sequence, and obtain a transform processing parameter. The terminal performs transform processing on the third modulation symbol sequence based on the transform processing to obtain a fourth modulation symbol sequence, and sequentially maps the fourth modulation symbol sequence to N consecutive time domain symbols corresponding to a first subcarrier. In this way, the terminal may disrupt ordering positions of time domain symbols corresponding to subcarriers, so that a modulation symbol in one time domain symbol may be mapped to another time domain symbol in a distributed manner, to mitigate phase noise power fluctuations between time domain symbols in the third modulation symbol sequence, thereby reducing impact of interference caused by phase noise on signal demodulation performance and better ensuring the signal demodulation performance.

In addition, it can be learned from the foregoing related descriptions of "Scheme 2" that Scheme 2 is to perform phase noise compensation through iterative processing. However, if Scheme 2 is used for performing phase noise compensation, processing overheads of the terminal are increased, and a heavy processing burden is caused to the terminal. In comparison with the foregoing Scheme 2, in the data transmission method provided in embodiments of this application, the terminal does not need to repeatedly perform a phase noise compensation operation, and only needs to perform the transform processing on the third modulation symbol sequence based on the transform processing parameter to obtain the fourth modulation symbol sequence. This can achieve compensation for the impact of the phase noise, and avoid increase in the processing overheads and the processing burden of the network device.

It should be understood that, for understanding of S1005 and S1006, refer to the foregoing descriptions at corresponding positions. Details are not described herein again. In addition, for understanding of another data transmission method performed by the terminal, refer to the foregoing data transmission method performed by the terminal. Details are not described herein again.

In a possible implementation, it can be learned from the foregoing related descriptions of "determining, by the network device, whether the transform processing needs to be performed on the first modulation symbol sequence based on the transform processing parameter", that the network device may determine in advance, before S1001, whether the transform processing needs to be performed on the first modulation symbol sequence based on the transform processing parameter. However, a part of parameters needed for the network device to determine whether the transform processing is performed on the first modulation symbol sequence based on the transform processing parameter are information about a transform processing capability supported by the terminal. Therefore, the terminal needs to notify the network device of the information about the transform processing capability supported by the terminal, so that the network device can determine, based on the information about the transform processing capability supported by the terminal, whether the transform processing is performed on the first modulation symbol sequence based on the transform processing parameter. In view of this, an embodiment of this application provides another data transmission method. FIG. 10 is used as an example for description. The data transmission method may include the following S1007.

S1007: The terminal sends second indication information to the network device. Correspondingly, the network device receives the second indication information.

The second indication information indicates information about a transform processing capability supported by the terminal.

In an optional implementation, the information about the transform processing capability supported by the terminal may include at least one of the following: whether transform processing is indicated, a maximum MCS supported for transform processing, a supported type of transform processing (for example, DFT transform processing, OCC transform processing, or reordering transform processing), a maximum quantity Lmax of OFDM symbols supported for transform processing, or a waveform (for example, CP-OFDM and/or DFT-s-OFDM) supported for transform processing. Certainly, the foregoing description is merely an example of the information about the transform processing capability supported by the terminal. The information about the transform processing capability supported by the terminal may further include other information. This is not limited in this application.

It may be understood that the terminal sends the second indication information to the network device, to notify the network device of the information about the transform processing capability supported by the terminal, so that the network device can subsequently determine the transform processing parameter based on the information about the transform processing capability supported by the terminal.

It may be understood that both the network device and the terminal may perform the transform processing on a modulation symbol sequence based on a same transform processing parameter, so that the network device (that is, a transmitting end or a receiving end) and the terminal (that is, a transmitting end or a receiving end) can use a same transform processing manner for the modulation symbol sequence. In this way, signal demodulation performance is better ensured, and additional algorithm overheads can be avoided, thereby reducing a computational burden of the network device and the terminal.

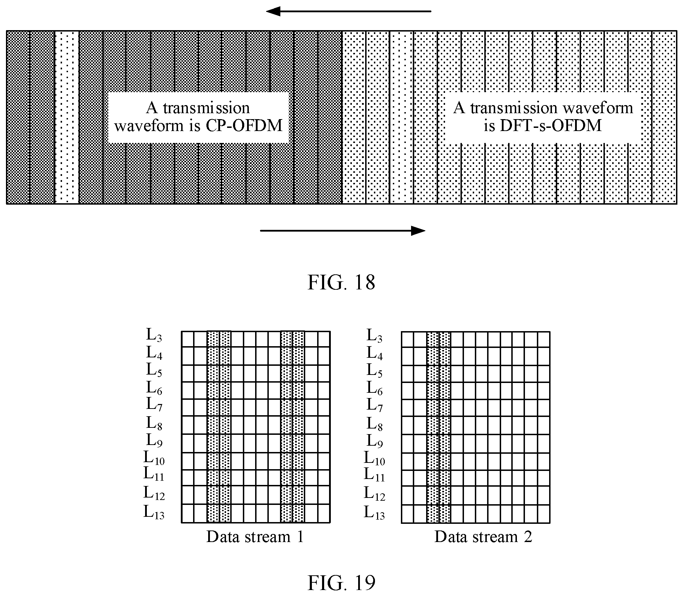

It should be noted that FIG. 10 represents a data transmission method in a scenario in which a transmission waveform of the signal is CP-OFDM, or a data transmission method in a scenario in which the transmission waveform of the signal is DFT-s-OFDM. However, the signal supports both the CP-OFDM transmission waveform and the DFT-s-OFDM transmission waveform. This may involve a transmission waveform switching scenario. As shown in FIG. 18, there may be the following two transmission waveform switching scenarios: Scenario 1: a scenario in which a transmission waveform is switched from CP-OFDM to DFT-s-OFDM; and Scenario 2: a scenario in which a transmission waveform is switched from DFT-s-OFDM to CP-OFDM.

In the transmission waveform switching scenario, a signal with a CP-OFDM transmission waveform and a signal with a DFT-s-OFDM transmission waveform may use a same transform processing parameter. In this way, both the network device and the terminal need to obtain transform processing only once, thereby reducing communication overheads.

It can be learned from the foregoing related descriptions of "PTRS introduction" that, a TD of a PTRS that is introduced in a scenario in which a transmission waveform is DFT-s-OFDM is different from a time domain density L_{PTRS} of the PTRS that is introduced in a scenario in which a transmission waveform is CP-OFDM. In view of this, to avoid abnormal demodulation, neither the network device nor the terminal may perform the transform processing on a time domain symbol that carries the PTRS.

In addition, the data transmission method provided in this embodiment of this application may be further applied to a single-carrier multi-stream transmission scenario. In the single-carrier multi-stream transmission scenario, different data streams may correspond to different schemes for PTRS introduction. For example, as shown in FIG. 19, a data stream 1 corresponds to Scheme 1 for PTRS introduction. In Scheme 1 for PTRS introduction, a quantity Ng of PTRS groups is 2, and a quantity Ns of sampling points in one PTRS group is also 2. A data stream 3 corresponds to Scheme 2 for PTRS introduction. In Scheme 2 for PTRS introduction, a quantity Ng of PTRS groups is 1, and a quantity Ns of sampling points in one PTRS group is also 2. Therefore, different data streams may correspond to different transform processing parameters, that is, different data streams may correspond to different frequency domain granularities of the transform processing, or different data streams may correspond to different quantities of time-frequency resources on which the transform processing is performed.

It can be learned from the foregoing related descriptions of the data transmission method shown in FIG. 10 that the data transmission method shown in FIG. 10 is described by using an example in which the network device sends a signal to the terminal. The data transmission method provided in embodiments of this application can be further applied to an uplink transmission scenario. However, for understanding of a data transmission method in the uplink transmission scenario, refer to the data transmission method shown in FIG. 10. Details are not described herein again.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the network device in the foregoing method embodiments, an apparatus including the network device, or a component that can be used in the network device. Alternatively, the communication apparatus may be the terminal in the foregoing method embodiments, an apparatus including the terminal, or a component that can be used in the terminal. It may be understood that, to implement the foregoing functions, the communication apparatus includes corresponding hardware structures and/or software modules for performing the functions. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be understood that division into modules in embodiments of this application is an example, and is merely logical function division. In an actual implementation, there may be another division manner.

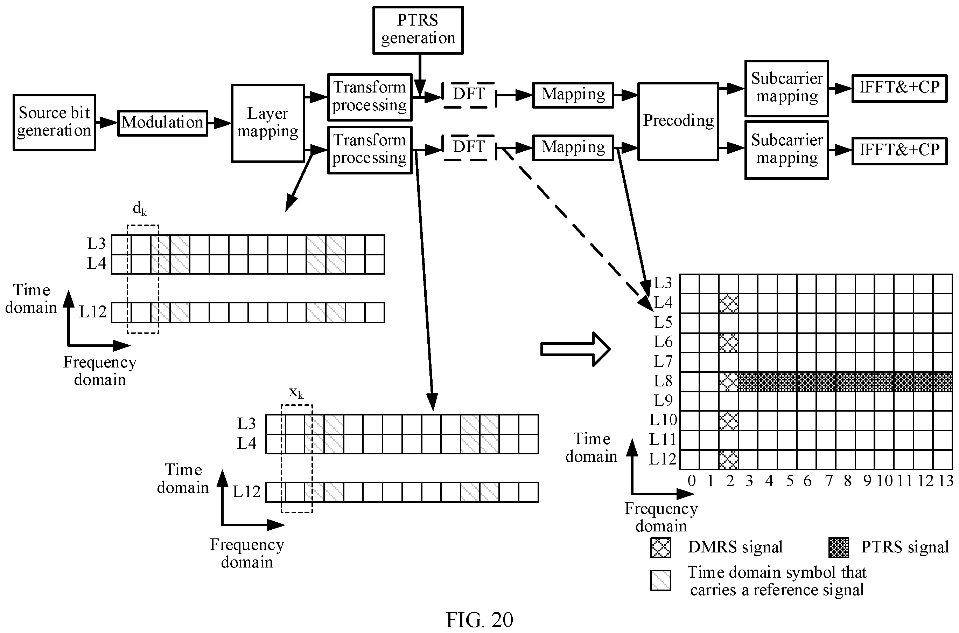

FIG. 20 is a diagram of an operation of generating, by a network device, a to-be-sent signal based on data. When a time domain symbol of the to-be-sent signal is a CP-OFDM symbol, an operation of generating, by the network device, the to-be-sent signal based on the data may include: source bit generation, modulation, layer mapping, transform processing, PTRS generation, mapping (for example, DMRS mapping), precoding, subcarrier mapping, IFFT, and CP processing.

When a time domain symbol of the to-be-sent signal is a DFT-s-OFDM symbol, an operation of generating, by the network device, the to-be-sent signal may include: source bit generation, modulation, layer mapping, transform processing, PTRS generation, DFT, mapping, precoding, subcarrier mapping, IFFT, and CP removal processing.

With reference to FIG. 20, the following describes an example of a process in which the network device performs transform processing: The network device may obtain a transform processing parameter, and perform the transform processing on a first modulation symbol sequence dₖ based on the transform processing parameter to obtain a second modulation symbol sequence xₖ. The first modulation symbol sequence dₖ is a modulation symbol corresponding to an M^{th} subcarrier in each of 11 OFDM symbols indicated by L3 to L12 of the to-be-sent signal, and M is less than or equal to a quantity of subcarriers configured for a channel. The network device maps the second modulation symbol sequence xₖ to 11 time domain symbols corresponding to the M^{th} subcarrier. The foregoing merely describes the transform processing performed by the network device on modulation symbols corresponding to one carrier. The network device may perform, based on the foregoing method, the transform processing on modulation symbols corresponding to each of a plurality of subcarriers configured for the channel.

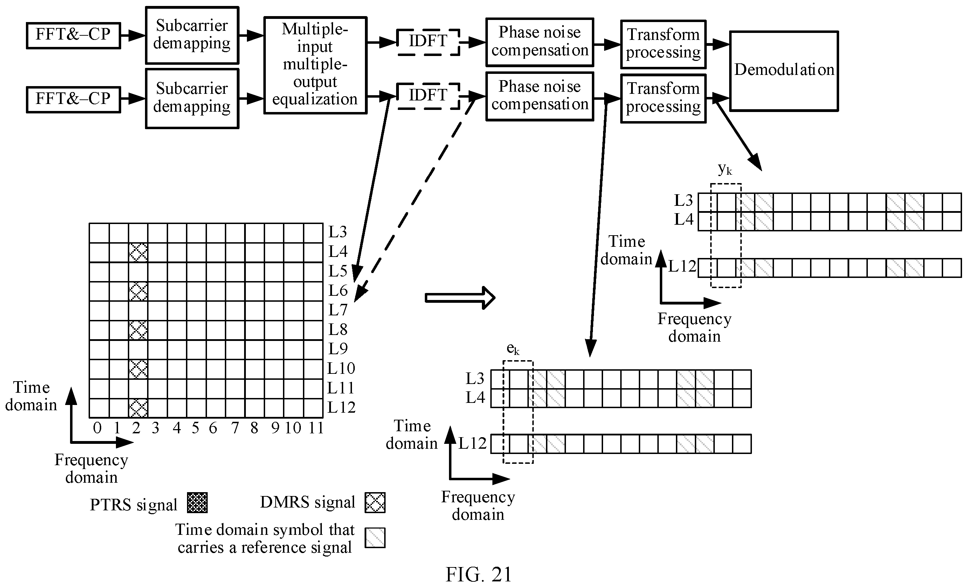

FIG. 21 is a diagram of an operation of obtaining, by a terminal, data based on a received signal. When a time domain symbol of the received signal is a CP-OFDM symbol, an operation of obtaining, by the terminal, the data based on the received signal may include: FFT, CP processing, subcarrier demapping, multiple-input multiple-output equalization, phase noise compensation (for example, CPE compensation or ICI compensation), transform processing, and demodulation.

When a time domain symbol of the received signal is a DFT-s-OFDM symbol, an operation of obtaining, by the terminal, the data based on the received signal may include: FFT, CP processing, subcarrier demapping, massive-MIMO equalization, IDFT, phase noise compensation, transform processing, and demodulation.

With reference to FIG. 21, the following describes an example of a process in which the terminal performs transform processing: The terminal may obtain a transform processing parameter, and perform the transform processing on a third modulation symbol sequence eₖ based on the transform processing parameter to obtain a fourth modulation symbol sequence yₖ. The third modulation symbol sequence eₖ is a modulation symbol corresponding to an M^{th} subcarrier in each of 11 OFDM symbols indicated by L3 to L12 of the received signal. The terminal maps the fourth modulation symbol sequence yₖ to 11 time domain symbols corresponding to the M^{th} subcarrier. The foregoing merely describes the transform processing performed by the terminal on modulation symbols corresponding to one carrier. The terminal may perform, based on the foregoing method, the transform processing on modulation symbols corresponding to each of a plurality of subcarriers configured for a channel.

It should be noted that operation methods shown in FIG. 2 and FIG. 3 are described by using an example in which the network device sends a signal to the terminal (that is, downlink transmission). For understanding of an operation method in a scenario in which the terminal sends a signal to the network device (that is, uplink transmission), refer to the foregoing descriptions at corresponding positions. Details are not described herein again.

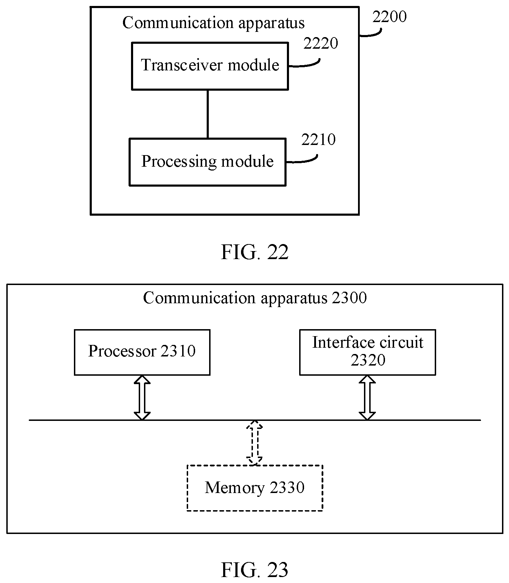

FIG. 22 and FIG. 23 are diagrams of structures of possible communication apparatuses according to embodiments of this application. The communication apparatuses may be configured to implement functions of the terminal or the network device in the foregoing method embodiments. Therefore, beneficial effects of the foregoing method embodiments can also be implemented. In embodiments of this application, each of the communication apparatuses may be the terminal 120 shown in FIG. 1, the network device 110 shown in FIG. 1, or a module (for example, a chip) used in the terminal or the network device.

As shown in FIG. 22, the communication apparatus 2200 includes a processing module 2210 and a transceiver module 2220. The communication apparatus 2200 is configured to implement the functions of the terminal or the network device in the method embodiment shown in FIG. 10.

When the communication apparatus 2200 is configured to implement the functions of the terminal in the method embodiment shown in FIG. 10, the transceiver module 2220 is configured to receive a third modulation symbol sequence {*c*₀, *c*₁, ... , *c*_{*N*-1}} from a network device, the transceiver module 2220 is further configured to obtain a transform processing parameter, and the processing module 2210 is configured to: perform transform processing on the third modulation symbol sequence based on the transform processing parameter to obtain a fourth modulation symbol sequence {*d*₁, *d*₂, ... , *d*_{*N*-1}}, and sequentially map the fourth modulation symbol sequence to N consecutive time domain symbols corresponding to a first subcarrier, where N is an integer greater than 1.

In some embodiments, the processing module 2210 is further configured to determine, when an index value of an MCS corresponding to the third modulation symbol sequence is greater than or equal to an index threshold, that the transform processing needs to be performed on the third modulation symbol sequence.

In some embodiments, the processing module 2210 is further configured to skip performing the transform processing on a first time-frequency resource when a quantity of subcarriers or subbands on which the transform processing is performed in the first time-frequency resource is less than or equal to a quantity threshold.

In some embodiments, the transceiver module 2220 is further configured to receive first indication information, where the first indication information indicates that the terminal is to perform the transform processing on the third modulation symbol sequence based on the transform processing parameter to obtain the fourth modulation symbol sequence.

In some embodiments, the transceiver module 2220 is further configured to send second indication information, where the second indication information indicates information about a transform processing capability supported by the terminal.

When the communication apparatus 2200 is configured to implement the functions of the network device in the method embodiment shown in FIG. 10, the transceiver module 2220 is configured to obtain a transform processing parameter; the processing module 2210 is configured to perform transform processing on a first modulation symbol sequence {*a*₀, *a*₁, ... , *a*_{*N*-1}} based on the transform processing parameter to obtain a second modulation symbol sequence {*a*₀, *b*₁, ... , *b*_{*N*-1}}, and sequentially map the second modulation symbol sequence to N consecutive time domain symbols corresponding to a first subcarrier; and the transceiver module 2220 is further configured to send the second modulation symbol sequence to a terminal, where N is an integer greater than 1.

In some embodiments, the processing module 2210 is further configured to determine, when an index value of an MCS corresponding to the first modulation symbol sequence is greater than or equal to an index threshold, that the transform processing needs to be performed on the first modulation symbol sequence.

In some embodiments, the processing module 2210 is further configured to skip performing the transform processing on a first time-frequency resource when a quantity of subcarriers or subbands on which the transform processing is performed in the first time-frequency resource is less than or equal to a quantity threshold.

In some embodiments, the transceiver module 2220 is further configured to send first indication information, where the first indication information indicates that the terminal is to perform the transform processing on the third modulation symbol sequence based on the transform processing parameter to obtain the fourth modulation symbol sequence.

In some embodiments, the transceiver module 2220 is further configured to receive second indication information, where the second indication information indicates information about a transform processing capability supported by the terminal.

For more detailed descriptions of the processing module 2210 and the transceiver module 2220, refer to related descriptions in the method embodiment shown in FIG. 10.

As shown in FIG. 23, a communication apparatus 2300 includes a processor 2310 and an interface circuit 2320. The processor 2310 is coupled to the interface circuit 2320. It may be understood that the interface circuit 2320 may be a transceiver or an input/output interface. Optionally, the communication apparatus 2300 may further include a memory 2330, configured to store instructions executed by the processor 2310, input data for the processor 2310 to run instructions, or data generated after the processor 2310 runs instructions. Sometimes, the interface circuit 2320 may also be understood as a part of the processor 2310. In this case, the communication apparatus 2300 includes the processor 2310.

When the communication apparatus 2300 is configured to implement the method shown in FIG. 10, the processor 2310 is configured to implement a function of the processing unit 2210, and the interface circuit 2320 is configured to implement a function of the transceiver unit 2220.

When the communication apparatus is a chip used in a terminal, the chip in the terminal implements functions of the terminal in the foregoing method embodiments. That the chip in the terminal receives information from a network device may be understood as that the information is first received by another module (for example, a radio frequency module or an antenna) in the terminal, and then sent by the module to the chip in the terminal. That the chip in the terminal sends information to the network device may be understood as that the information is first sent to another module (for example, a radio frequency module or an antenna) in the terminal, and then sent to the network device by the module.

When the communication apparatus is a chip used in a network device, the chip in the network device implements functions of the network device in the foregoing method embodiments. That the chip in the network device receives information from a terminal may be understood as that the information is first received by another module (for example, a radio frequency module or an antenna) in the network device, and then sent by the module to the chip in the network device. That the chip in the network device sends information to a terminal may be understood as that the information is delivered to another module (for example, a radio frequency module or an antenna) in the network device, and then sent by the module to the terminal.

In this application, that an entity A sends information to an entity B may be that A directly sends the information to B, or may be that A indirectly sends the information to B via another entity. Similarly, that the entity B receives information from the entity A may be that the entity B directly receives information sent by the entity A, or may be that the entity B indirectly receives information sent by the entity A via another entity. The entity A and the entity B herein each may be a RAN node or a terminal, or may be a module in a RAN node or a terminal. Information sending and receiving may be information exchange between a RAN node and a terminal, for example, information exchange between a network device and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a network device and another module in the network device.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in the ASIC. In addition, the ASIC may be located in a network device or a terminal. Alternatively, the processor and the storage medium may exist as discrete components in the network device or the terminal.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, all or a part of the procedures or functions in embodiments of this application are executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A data transmission method, comprising:
obtaining a transform processing parameter;
performing transform processing on a first modulation symbol sequence {*a*₀, *a*₁, ... , *a*_{*N*-1}} based on the transform processing parameter to obtain a second modulation symbol sequence {*b*₀, *b*₁, ... , *b*_{*N*-1}}, and sequentially mapping the second modulation symbol sequence to N consecutive time domain symbols corresponding to a first subcarrier, wherein N is an integer greater than 1; and
sending the second modulation symbol sequence to a terminal.

2. The method according to claim 1, wherein before the obtaining the transform processing parameter, the method further comprises:
determining, when an index value of a modulation and coding scheme corresponding to the first modulation symbol sequence is greater than or equal to an index threshold, that the transform processing needs to be performed on the first modulation symbol sequence.

3. The method according to claim 1 or 2, wherein the transform processing parameter comprises at least one of the following: a type of the transform processing, a frequency domain granularity of the transform processing, a quantity of time-frequency resources on which the transform processing is performed, or whether the transform processing is performed on a time domain symbol that carries a phase tracking reference signal PTRS.

4. The method according to claim 3, wherein when a time domain density of the PTRS is 1, the transform processing parameter comprises performing the transform processing on a modulation symbol that carries the PTRS; or
when the time domain density of the PTRS is not 1, the transform processing parameter comprises skipping performing the transform processing on a modulation symbol that carries the PTRS.

5. The method according to claim 3 or 4, wherein a granularity of the transform processing comprises a subcarrier granularity and/or a subband granularity, wherein the subband comprises two or more subcarriers.

6. The method according to any one of claims 1 to 5, wherein the method further comprises:
skipping performing the transform processing on a first time-frequency resource when a quantity of subcarriers or subbands on which the transform processing is performed in the first time-frequency resource is less than or equal to a quantity threshold.

7. The method according to any one of claims 1 to 6, wherein the method further comprises:
sending first indication information, wherein the first indication information indicates that the terminal is to perform the transform processing on a third modulation symbol sequence based on the transform processing parameter to obtain a fourth modulation symbol sequence.

8. The method according to any one of claims 1 to 7, wherein the first modulation symbol sequence is a modulation symbol sequence obtained through layer mapping processing.

9. A data transmission method, comprising:
receiving a third modulation symbol sequence {*c*₀, *c*₁, ... , *c*_{*N*-1}} from a network device;
obtaining a transform processing parameter; and
performing transform processing on the third modulation symbol sequence based on the transform processing parameter to obtain a fourth modulation symbol sequence {*d*₁, *d*₂, ... , *d*_{*N*-1}}, and sequentially mapping the fourth modulation symbol sequence to N consecutive time domain symbols corresponding to a first subcarrier, wherein N is an integer greater than 1.

10. The method according to claim 9, wherein before the obtaining the transform processing parameter, the method further comprises:
determining, when an index value of a modulation and coding scheme corresponding to the third modulation symbol sequence is greater than or equal to an index threshold, that the transform processing needs to be performed on the third modulation symbol sequence.

11. The method according to claim 9 or 10, wherein the transform processing parameter comprises at least one of the following: a type of the transform processing, a frequency domain granularity of the transform processing, a quantity of time-frequency resources on which the transform processing is performed, or whether the transform processing is performed on a time domain symbol that carries a phase tracking reference signal PTRS.

12. The method according to claim 11, wherein when a time domain density of the PTRS is 1, the transform processing parameter comprises performing the transform processing on a modulation symbol that carries the PTRS; or
when the time domain density of the PTRS is not 1, the transform processing parameter comprises skipping performing the transform processing on a modulation symbol that carries the PTRS.

13. The method according to claim 11 or 12, wherein a granularity of the transform processing comprises a subcarrier granularity and/or a subband granularity, wherein the subband comprises two or more subcarriers.

14. The method according to any one of claims 9 to 13, wherein the method further comprises:
skipping performing the transform processing on a first time-frequency resource when a quantity of subcarriers or subbands on which the transform processing is performed in the first time-frequency resource is less than or equal to a quantity threshold.

15. The method according to any one of claims 9 to 14, wherein the method further comprises:
receiving first indication information, wherein the first indication information indicates that a terminal is to perform the transform processing on the third modulation symbol sequence based on the transform processing parameter to obtain the fourth modulation symbol sequence.

16. The method according to any one of claims 9 to 14, wherein the third modulation symbol sequence is a modulation symbol sequence obtained through phase noise compensation.

17. A communication apparatus, comprising a functional unit configured to perform the method according to any one of claims 1 to 8, or a functional unit configured to perform the method according to any one of claims 9 to 16, wherein an action performed by the functional unit is implemented by hardware or implemented by hardware executing corresponding software.

18. A communication apparatus, wherein the communication apparatus comprises a processor, and the processor is configured to cause, by running a computer program or instructions or by using a logic circuit, the communication apparatus to perform the method according to any one of claims 1 to 8 or the communication apparatus to perform the method according to any one of claims 9 to 16.

19. A computer-readable storage medium, wherein the computer-readable storage medium stores computer instructions or a program, and when the computer instructions or the program is run on a computer, the communication apparatus is caused to perform the method according to any one of claims 1 to 8, or the communication apparatus is caused to perform the method according to any one of claims 9 to 16.

20. A communication system, comprising the communication apparatus configured to perform the method according to any one of claims 1 to 8 and the communication apparatus configured to perform the method according to any one of claims 9 to 16.
